# EUROPÄISCHE PATENTSCHRIFT

(11) **EP 1 928 765 B1**
(45) Veröffentlichungstag und Bekanntmachung des Hinweises auf die Patenterteilung: **14.10.2009**
(21) Anmeldenummer: 06762131.8
(22) Anmeldetag: 22.06.2006
(51) Int. Cl.: B65G 1/133

(54) **HORIZONTAL-UMLAUFLAGERSYSTEM**
HORIZONTAL CIRCUIT STORAGE SYSTEM
SYSTEME DE STOCKAGE A ROTATION HORIZONTALE

(30) Priorität: 29.09.2005 DE 102005046821; 21.04.2006 DE 202006006666 U
(43) Veröffentlichungstag der Anmeldung: 11.06.2008
(73) Patentinhaber: Bellheimer Metallwerk GmbH, 76756 Bellheim (DE)
(72) Erfinder: ZUMBRUNN, Werner, CH-4132 Muttenz (CH); KOBLER, Stefan, CH-4623 Neuendorf (CH); BURKHARD, Gregor, CH-4600 Olten (CH); BOUCHE, Norbert, 76829 Landau (DE); GÖTZ, Jürgen, 76676 Graben-Neudorf (DE); TALON, René, 76872 Hergersweiler (DE)
(74) Vertreter: Grünecker, Kinkeldey, Stockmair & Schwanhäusser Anwaltssozietät
(86) Internationale Anmeldenummer: PCT/EP2006/005982
(87) Internationale Veröffentlichungsnummer: WO 2007/036250

(56) Entgegenhaltungen:
- WO-A-20/04087543
- GB-A- 1 516 120

## Beschreibung

Die Erfindung betrifft ein Horizontal-Umlauflagersystem zur Lagerung von mittels Lagergutträgern aufgenommenem Lagergut sowie ein Verfahren zum Zugriff auf einen zur Bereitstellung bestimmten, Lagergut aufnehmenden Lagergutträger eines Horizontal-Umlauflagersystems.

Eine Horizontalfördereinrichtung in dieser Ausgestaltung und Funktionsweise ist beispielsweise aus der DE 101 57 121 A1 bekannt. In dieser Druckschrift ist ein Lager- und Materialfluss-System gezeigt und beschrieben, bei dem ein Regal mit mehreren hintereinander angeordneten Regallagerplätzen zwischen einem Paternoster-System und einer rückwärtigen Trageinheit angeordnet. Dabei soll das Paternoster-System eine schnelle Umschichtung der sich im Durchlaufregal befindlichen Lagergüter ermöglichen.

Für die praktische Anwendung ist jedoch der Ausnutzungsgrad des Lagersystems der DE 101 57 121 A1 zu gering, da die rückwärtige Trageinheit und das Paternoster-System zusammen zuviel Platz, der nicht zur Lagerung verwendet werden kann, einnehmen. Außerdem ist bei dem Lagersystem der DE 101 57 121 A1 ein schneller Zugriff nur gewährleistet, wenn das Paternoster-System einen schnellen Umlauf der Lagergutträger erlaubt. Ein solches schnell laufendes Paternoster-System ist jedoch insbesondere bei schwerem Lagergut konstruktiv sehr aufwändig.

Ein ähnliches Lagersystem ist aus der DE 199 35 742 A1 bekannt. Bei diesem Lagersystem ist vor dem Lagerbereich ein Bereitstellungslager in Form eines Paternoster-Systems angeordnet. Oberhalb des Lagerbereichs läuft in horizontaler Richtung ein Lagerbediengerät in Form einer Traverse. Dieses System weist für praktische Anwendungen, insbesondere bei modernen automatisierten Lagern, zu lange Zugriffszeiten auf eine beliebige Lagerstelle innerhalb des Lagerbereichs auf.

Weitere Umlaufsysteme sind beispielsweise aus der WO 2004/087543 A1 oder der GB 1,516,120 bekannt. In der WO 2004/087543 A1 ist ein Pufferspeicher beschrieben, bei dem Container in einem Umlauf zwischen zwei gegenüberliegenden Öffnungen bewegt werden. Die GB 1,516,120 betrifft ein Fördersystem, das Träger mit Nahrungsmitteln in einer Behandlungskammer umlaufen lässt.

Schließlich ist aus der DE 40 33 184 A1 ein Lagersystem bekannt, bei dem die einzelnen Lagerebenen jeweils Teil eines Paternoster-Systems sind. Das Lagergut wird seitlich nebeneinanderliegend in die Lagerebenen ein- und ausgelagert. Die Lagerebenen laufen mit dem Paternoster um. Dieses System ist nur schwer an unterschiedliche Anforderungen der Lagerhaltung anpassbar, zudem sind die Zugriffszeiten für den Einsatz in voll automatisierten Anlagen zu lange.

Der Erfindung liegt daher die Aufgabe zugrunde, ein Lagersystem der eingangs genannten Art so zu verbessern, dass bei guter Raumausnutzung ein schneller und automatisierter Zugriff auf beliebige Lagerstellen stattfinden kann.

Diese Aufgabe wird mit dem Horizontal-Umlauflagersystem gemäss Anspruch 1 gelöst.

Diese Lösung hat den Vorteil, dass durch den an beliebiger Stelle im Lagerbereich ausbildbaren Horizontalumlauf ein schneller Zugriff auf beliebige Lagergutträger im Lagerbereich stattfinden kann. Das Ein- und Auslagern von Lagergut wird somit einfacher automatisierbar und schneller. Insbesondere ist das erfindungsgemäß ausgestaltete Horizontal-Umlauflagersystem für ein chaotisches Lagersystem geeignet, bei dem die Steuereinheit die Zuordnung der Ware auf einen Lagergutträger vomimmt. Die Lagerebenen sind insbesondere stationär d.h. in vertikaler Richtung unbeweglich.

Die obige Aufgabe wird erfindungsgemäß ferner mit dem Verfahren gemäss Anspruch 23 gelöst.

Die erfindungsgemäße Lösung kann durch eine Reihe von voneinander unabhängigen Weiterentwicklungen, die jeweils für sich erfinderisch sind und beliebig miteinander kombiniert werden können, weiter verbessert werden. Diese Weiterentwicklungen sind im Folgenden beschrieben.

Um den Horizontalumlauf an beliebiger Stelle des Lagerbereichs mit beliebigen Lagerebenen zu erzeugen, ist es von Vorteil, wenn jede Lagerebene jeweils einen eigenen Antrieb aufweist, der vorzugsweise unabhängig vom Antrieb der jeweils anderen Lagerebenen betätigbar ausgestaltet ist. Zwar könnte man auch die Horizontalfördereinrichtungen mehrerer, beispielsweise eines Paares von, Lagerebenen an einen einzigen Antrieb koppeln, doch sind dann für die gegenläufige Bewegung beliebiger Kombinationen von Lagerebenen zur Erzeugung eines Horizontalumlaufs aufwändige Kupplungs- und Getriebeschaltungen notwendig. Dieser Aufwand kann in einer konstruktiv einfachen Ausgestaltung jedoch vermieden werden, wenn die das wenigstens eine Paar von Lagerebenen antreibende Horizontalfördereinrichtung die Lagerebenen auf mechanische Weise miteinander zwangskoppelt. Beispielsweise kann eine solche Zwangskopplung durch einen umlaufenden Zugmitteltrieb realisiert werden, von dem jeweils ein Trum einer Lagerebene des wenigstens einen Paares zugeordnet ist.

Bei Lagersystemen, die üblicherweise über einen sehr langen Zeitraum betrieben werden, ist die Wartung oft aufwendig. Um den Zugang zu den Antriebssystemen und damit die Wartung zu erleichtern, ist gemäß einer vorteilhaften Ausgestaltung vorgesehen, dass die Antriebskomponenten der Horizontalfördereinrichtungen und der Vertikalfördereinrichtungen gemeinsam an einer Seitenfläche des Horizontal-Umlaufsystems angeordnet sind, vorzugsweise übereinander. Bei dieser Ausgestaltung muss bei der Wartung der Antriebssysteme lediglich eine Seite des Horizontal-Umlaufsystems zugänglich sein. Bei einer Anordnung der Antriebssysteme übereinander reicht sogar der Zugriff auf einen kleinen Teil der Seitenfläche, indem die Antriebskomponenten beispielsweise von außen zugänglich hinter einem wiederholt entfernbar am Horizontal-Umlauflagersystem angeordneten Wartungspaneel angeordnet sind.

Von Vorteil ist es ferner, wenn die Anzahl der Lagergutträger im Horizontal-Umlauflagersystem höchstens N + n beträgt, wobei N die Anzahl der Lagergutträger bei voll bestücktem Lagerbereich und n die Anzahl der Vertikalfördereinrichtungen im Horizontal-Umlauflagersystem ist. Bei dieser maximalen Bestückung ist noch sichergestellt, dass jeder beliebige Lagergutträger auf kürzestem Wege zu einer Bereitstellungsstation, in der durch Bedienpersonal auf das Lagergut in diesem Lagergutträger zugegriffen wird, bewegt werden kann. Ist diese Anzahl überschritten, müsste ein Lagergutträger in der Bereitstellungsstation zwischengelagert werden, um weiterhin kürzeste Förderwege für die Lagergutträger zu gewährleisten. Dies würde aber im Bereich der Bereitstellungsstation einen zusätzlichen Austausch der Lagergutträger erfordern oder, falls der Zugriff auf das Lagergut im zwischengelagerten Lagergutträger für bestimmtes Bedienpersonal gesperrt sein soll, eine Vorrichtung erfordern, welche den Zugriff auf das Lagergut in der Bereitstellungsstation nur nach einer Verifizierung der Zugriffsberechtigung des Bedienpersonals zulässt.

In den einzelnen Lagerebenen kann der Transport der Lagergutträger durch Mitnehmer der Horizontalfördereinrichtungen erfolgen, die in lagergutträgerseitige Mitnehmerkupplungen vertikal ein- und ausfahrbar ausgestaltet sind. Die Mitnehmer können direkt an einem Zugmitteltrieb angebracht sein. Durch die vertikale Ein- und Ausfahrbarkeit ist bei dieser vorteilhaften Ausgestaltung gewährleistet, dass die Lagergutträger in den Vertikalfördereinrichtungen auch an den Mitnehmerkupplungen vorbeigefahren werden und somit die Lagerebenen passieren können und dabei in und außer Eingriff mit den Mitnehmerkupplungen gelangen. Hierzu müssen die lagergutträgerseitigen Mitnehmerkupplungen beispielsweise lediglich als in vertikaler Richtung offene C-Profile ausgestaltet sein. Durch den Abstand der Mitnehmer voneinander wird der Abstand der Lagergutträger voneinander in den Lagerebenen bestimmt.

Insbesondere kann jeweils ein Paar von Mitnehmern jeweils einem Lagergutträger zugeordnet sein. Bei dieser Ausgestaltung kann der jeweils von der Vertikalfördereinrichtung abgewandte Mitnehmer den Lagergutträger auf die Vertikalfördereinrichtung schieben oder von dieser in den Lagerbereich ziehen, während der andere Mitnehmer bereits ausgekoppelt ist. Entsprechend können die Lagergutträger zwei Mitnehmerkupplungen aufweisen, die in Richtung der Vertikalfördereinrichtungen voneinander beabstandet sind. In einem an die Vertikalfördereinrichtung grenzende Bereich der Lagergutebenen, in dem ein Lagergutträger von der Lagerebene in die Vertikalfördereinrichtung überführt wird, ist ein Mitnehmer in jeweils der von der Vertikalfördereinrichtung abgewandten Mitnehmerkupplung aufgenommen.

Die Vertikalfördereinrichtungen können ferner an wenigstens einer Auflagefläche, auf der die Lagergutträger in der Vertikalfördereinrichtung aufliegen, mit einem Rastmittel versehen sein, das mit einem entsprechenden Gegenrastmittel des Lagergutträgers in einer Transportposition in Eingriff gelangt und den Lagergutträger in der Vertikalfördereinrichtung gegen Verschiebung sichert. Das Rastmittel kann insbesondere als ein Rastvorsprung ausgebildet sein. Als Gegenrastmittel des Lagergutträgers können vorzugsweise die den Lagergutträger abstützenden Rollen oder Gleitschuhe verwendet werden. Das Rastmittel dient als Bremse und Überlaufschutz beim Überführen der Lagergutträger von einer Lagerebene in die Vertikalfördereinrichtung und zurück.

In einer weiteren Ausgestaltung, die für sich betrachtet bei dem eingangs genannten Horizontal-Umlaufsystem ebenfalls erfinderisch ist, ist jeweils eine Horizontalfördereinrichtung wenigstens einem Paar von Lagerebenen zugeordnet und die Lagergutträger in der einen Lagerebene des Paars sind gegenläufig zu den Lagergutträgem in der anderen Lagerebene des Paars angetrieben.

Mit dieser Ausgestaltung lässt sich ohne aufwendige Synchronisierung des Antriebs unterschiedlicher Lagerebenen ein schneller Zugriff auf beliebige Lagergutträger erreichen. Die beiden über die Horizontalfördereinrichtung gegenläufig angetriebenen Lagerebenen bilden dabei einen horizontalen Paternoster.

Ferner ist es von Vorteil, wenn die beiden Vertikalfördereinrichtungen jeweils einen unabhängigen Antrieb aufweisen. Durch diese Ausgestaltung ist es insbesondere möglich, dass die eine Vertikalfördereinrichtung den zur Bereitstellung bestimmten Lagergutträger zur Bereitstellungsstation fördert, während sich die andere Vertikalfördereinrichtung bereits zu den Lagerebenen bewegt, die den Horizontalumlauf für den nächsten zur Bereitstellung bestimmten Lagergutträger bilden. Eine solche Bewegung wäre bei einem Zentralantrieb für beide Vertikaleinrichtungen nur mit aufwändigen Kupplungen und Getrieben zu realisieren.

Die Synchronisation der einzelnen Antriebe der Horizontalfördereinrichtungen und/oder der Vertikalfördereinrichtungen kann durch die Steuereinheit oder durch mechanische Kopplung erfolgen.

Bei dem erfindungsgemäßen Lagersystem können die Vertikalfördereinrichtungen insbesondere einschachtig bzw. einsäulig ausgebildet sein, so dass zu einem Zeitpunkt nur jeweils eine Bewegung in eine Richtung an jedem Ende der Lagerebenen möglich ist. Durch diese Ausgestaltung wird Platz gespart, der dem Lagerbereich zur Verfügung gestellt werden kann. Die Raumausnutzung wird somit effizienter.

Um beliebig breite Lagergutträger ohne große Modifikationen der Grundstruktur des Horizontal-Umlauflagersystems verarbeiten zu können, ist es von Vorteil, wenn die Horizontalfördereinrichtungen und/oder die Vertikalfördereinrichtungen jeweils an den beiden seitlichen, in Querrichtung gelegenen Enden der Lagergutträger auf diese einwirken. Dies kann auf einfache Weise beispielsweise dadurch erreicht werden, dass an den Seitenwänden des Horizontal-Umlauflagersystems jeweils Fördermittel angebracht sind, welche mit den Seiten der Lagergutträger in Eingriff gelangen. Bei dieser Ausgestaltung bleibt die Ausgestaltung der Seitenwände unabhängig von der Breite der Lagergutträger und das Horizontal-Umlauflagersystem kann durch Änderung des Abstandes der Seitenwände an verschieden breite Lagergutträger angepasst werden.

Die einzelnen Lagerebenen können in einer weiteren vorteilhaften Ausgestaltung jeweils durch ein Schienensystem gebildet sein, wobei sich die Lagergutträger einer Lagerebene auf dem Schienensystem dieser Lagerebene horizontal beweglich abstützen. Ein Schienensystem ermöglicht einen Aufbau des Horizontal-Umlauflagersystems mit geringem Materialaufwand ohne wesentliche Einschränkungen in den Traglasten. Die Schienen können insbesondere paarweise zu beiden Seiten des Lagerbereichs, an den Seiten des Lagersystems, angeordnet sein, so dass die Lagergutträger an beiden seitlichen Enden abgestützt sind.

Zur horizontal beweglichen Abstützung der Lagergutträger können die Lagerebenen insbesondere Rollen verwendet werden, die beispielsweise an dem Schienensystems ausgebildet sein können, wobei das Schienensystem Rollenschienen umfassen kann.

Ebenso können in einer vorteilhaften Ausgestaltung die Vertikalfördereinrichtungen Transportebenen, beispielsweise in Form eines Schienensystems aufweisen. Auf den einzelnen Transportebenen können die Lagergutträger in senkrechter Richtung transportiert werden. Um die Lagergutträger von einer Lagerebene auf die Vertikalfördereinrichtung zu überführen, muss der Lagergutträger bei dieser Ausgestaltung lediglich von einer Lagerebene auf die Transportebene, was bei der Verwendung von Schienensystemen besonders einfach ist. Das Schienensystem der Vertikalfördereinrichtungen kann insbesondere dem Schienensystem der Lagerebenen entsprechen und beispielsweise Rollenschienen umfassen. Die Transportebenen können bewegungsstarr miteinander gekoppelt sein, um einen gleichzeitigen Transport mehrerer Lagergutträger in vertikaler Richtung zu ermöglichen.

Die Vertikalfördereinrichtungen können ferner ein umlaufendes Zugmittelgetriebe aufweisen, wobei an dem Zugmittel die Transportebenen angebracht sein können. Insbesondere können bei dieser Ausgestaltung die Transportebenen von einer Mehrzahl von am Zugmittel angeordneten, übereinanderliegenden Schienen gebildet sein, deren Abstand in vertikaler Richtung vorzugsweise dem Abstand der Schienen der Lagerebenen entspricht. Auf diese Weise ist ein schneller Transport der Lagergutträger insbesondere beim Bilden des Horizontalumlaufs möglich, weil beim Verfahren der Vertikalfördereinrichtung um einen Lagerebenenabstand wieder sämtliche Schienen der Lagerebene und der Vertikalfördereinrichtung miteinander fluchten. Beim Bilden des Horizontalumlaufs, bei dem ein Lagergutträger der einen Lagerebene in eine andere Lagerebene transportiert werden muss, muss die Vertikalfördereinrichtung daher ohne Bewegungsumkehr lediglich in einer Richtung angetrieben werden und nicht jeweils zwischen den am Horizontalumlauf beteiligten Lagerebenen hin und her fahren.

Um auf den Vertikalfördereinrichtungen große Lasten tragen zu können, können die Schienen durch unterhalb der Schienen angeordnete, vertikal auf einer Stützfläche laufende Rollen abgestützt sein, die durch Belastung der Schienen in im Wesentlichen horizontaler Richtung auf die Stützfläche gedrückt sind. Die Stützfläche kann insbesondere von einer im Bereich der Vertikalfördereinrichtungen senkrecht verlaufenden Lauffläche an den Seiten des Lagersystems gebildet sein.

Die Übergabe von Lagergutträgem zwischen den Lagerebenen und den Transportebenen zu der Vertikalfördereinrichtung kann dadurch vereinfacht werden, dass die Lagergutträger mit Kupplungen versehen sind, durch welche die Lagergutträger einer Lagerebene eine Horizontalkraft übertragend und lösbar aneinander gekoppelt sind. Bei dieser Ausgestaltung kann die Antriebskraft zur Bewegung der Lagergutträger an einer beliebigen Stelle in der Lagerebene in lediglich einen Lagergutträger eingeleitet werden, um die Lagergutträger einer Lagerebene zusammen zu bewegen. Durch die Kupplung wird die Bewegung eines Lagergutträgers auf die übrigen Lagergutträger einer Lagerebene übertragen. Über die übrigen Lagergutträger kann dann der jeweils sich an einem Ende der Lagerebene befindliche eingekuppelte Lagergutträger auf eine Transportebene die Vertikalfördereinrichtung geschoben oder von dieser auf die Lagerebene gezogen werden.

Als Kupplung für die Lagergutträger kann in einer vorteilhaften Weiterbildung eine durch eine Vertikalbewegung zweier aneinandergekuppelter Lagergutträger relativ zueinander lösbar ausgestaltete mechanische Kupplung verwendet werden. Auf einfache Weise kann dies dadurch verwirklicht werden, dass eine an einem Lagergutträger angebrachte Kupplungslasche in Richtung der Lagerebene eine entsprechend ausgebildete Kupplungslasche am anderen Lagergutträger in horizontaler Richtung hintergreift, indem die beiden Kupplungslaschen in senkrechter Richtung ineinander geschoben werden.

Zum Antrieb der Lagergutträger einer Lagergutebene kann die Horizontalfördereinrichtung eine Rollenkette oder ein Paar bzw. eine Mehrzahl von seitlich angebrachten Rollenketten aufweisen. Hierzu können die Lagergutträger mit einem Kupplungselement versehen sein, das mit der Rollenkette in Eingriff bringbar ist. Das Kupplungselement kann beispielsweise ein Zahnprofil umfassen, das mit der Rollenkette kämmt. Die Verwendung einer Rollenkette zusammen mit einem Kupplungselement auf Seiten des Lagergutträgers hat den Vorteil, dass der Abstand der Lagergutträger durch den Abstand der Rollen und die Verzahnung des Zahnprofils vorbestimmt ist. Auf diese Weise können sich die Lagergutträger nicht voneinander entfernen oder gegeneinander schlagen, während sie sich mit der Rollenkette im Eingriff befinden.

Außerdem können an den Lagergutträgern Abstandshalter vorgesehen sein, um den Abstand der Lagergutträger einer Lagerebene festzulegen. Sind die Abstandshalter aus einem elastisch kompressiblen Material gefertigt, können Stöße abgefangen und Beschädigungen bei empfindlichem Lagergut vermieden werden. Die Abstandshalter sind vorzugsweise mit vertikal verlaufenden Auflaufschrägen versehen, um Kollisionen der sich jeweils am Ende einer Lagerebene befindlichen Lagergutträger mit den Lagergutträgem in den Vertikalfördereinrichtungen zu vermeiden.

Im Betrieb fördert eine der Vertikalfördereinrichtungen den zur Bereitstellung bestimmten Lagergutträger von seiner Lagergutebene zu der Bereitstellungsstation bzw. von der Bereitstellungsstation zu derjenigen Lagergutebene, die von der Steuereinheit für den Lagergutträger bestimmt ist. Dabei kann bereits an der Bereitstellungsstation ein weiterer Lagergutträger zur Ein- oder Auslagerung bereitgestellt werden, während die Lagergutträger zweier Lagerebenen im Horizontalumlauf für den Zugriff auf den nächsten bereitzustellenden Lagergutträger umläuft. Durch diese Maßnahme werden die Zugriffszeiten nochmals verringert.

Zur weiteren Verringerung der Zugriffszeiten kann der sich an der Bereitstellungsstation befindliche Lagergutträger bereits von der Vertikalfördereinrichtung aufgenommen werden, während diese den nächsten zur Bereitstellung bestimmten Lagergutträger von seiner Lagerebene zur Bereitstellungsstation fördert. Die beiden Lagergutträger können dabei vorzugsweise in unterschiedlichen Lagerebenen aufgenommen sein. Ab diesem Zeitpunkt werden von der Vertikalfördereinrichtung zwei Lagergutträger gleichzeitig transportiert. Während des Transports des zur Bereitstellung bestimmten Lagergutträgers zur Bereitstellungsstation wird der vorherige Lagergutträger gleichzeitig von der Bereitstellungsstation weg transportiert und steht nach der Übergabe des zur Bereitstellung bestimmten Lagergutträgers an die Bereitstellungsstation sofort zur Einlagerung bereit. Die Vertikalfördereinrichtung muss hierzu den vorherigen Lagergutträger lediglich zu der für ihn bestimmten Lagergutebene transportieren. Beim nächsten Horizontalumlauf wird der Lagergutträger dann in den Lagerbereich eingespeist.

Für den Zugriff auf einen neuen zur Bereitstellung an der Bereitstellungsstation bestimmten Lagergutträger wird der vorherige Lagergutträger in den neuen Horizontalumlauf eingespeist.

Um den Horizontalumlauf möglichst schnell durchzuführen, wird dieser vorzugsweise durch zwei unmittelbar übereinanderliegende Lagergutebenen geführt.

Das Lagersystem ist vorzugsweise mit einer Anzahl von Lagergutträgem versehen, die wenigstens der Kapazität des Lagerbereichs entspricht, so dass der Lagerbereich voll bestückt ist. Zusätzlich kann in jeder Vertikalfördereinrichtung ein weiterer Lagergutträger zur Bildung eines Horizontalumlaufs zwischengelagert sein. Ein weiterer Lagergutträger kann zur Bereitstellung an der Bereitstellungsstation oder in der einen zur Bereitstellungsstation führenden Vertikalfördereinrichtung zwischengelagert sein. Durch diese zusätzlichen Lagergutträger kann die Nutzung des vom Lagersystem eingenommenen Raums verbessert werden.

Im Folgenden wird die Erfindung anhand zweier Ausführungsbeispiele mit Bezug auf die Zeichnungen näher erläutert. Dabei können, wie bei der obigen Schilderung der unterschiedlichen Weiterbildungen ausgeführt ist, die einzelnen Merkmale dieser Weiterbildungen auch in beliebiger Kombination weggelassen oder hinzugefügt werden, wenn es im konkreten Anwendungsfall auf die mit diesen Ausführungen verbundenen Vorteile nicht ankommt.

Es zeigen:
- Fig. 1: eine schematische Perspektivansicht eines erfindungsgemäßen Horizontal-Umlauflagersystems;
- Fig. 2: eine weitere schematische Perspektivdarstellung des Horizontal-Umlauflagersystems der Fig. 1;
- Fig.3: eine schematische Perspektivdarstellung eines Details des Horizontal-Umlauflagersystems der Fig. 1;
- Fig. 4: eine schematische Perspektivdarstellung eines Lagergutträgers für das Horizontal-Umlaufsystem der Fig. 1;
- Fig. 5: eine schematische Draufsicht auf Lagergutträger einer Lagerebene;
- Fig. 6: eine schematische Perspektivansicht einer weiteren Ausführungsform eines erfindungsgemäßen Horizontal-Umlauflagersystems;
- Fig. 7: einen Horizontalschnitt durch eine Vertikalfördereinrichtung des Horizontal-Umlauflagersystems der Fig. 6;
- Fig. 8: eine schematische Perspektivdarstellung eines Lagergutträgers für das Horizontal-Umlaufsystem der Fig. 6;
- Fig. 9: eine Schiene einer Vertikalfördereinrichtung der Ausführungsform der Fig. 6 in einer schematischen Perspektivansicht;
- Fig. 10: einen Ausschnitt aus einer Horizontalfördereinrichtung der Ausführungsform der Fig. 6 in einer schematischen Perspektivansicht;
- Fig. 11: einen Ausschnitt aus dem Horizontal-Umlauflagersystem der Fig. 6 in einer Seitenansicht;
- Fig. 12 bis 17: schematische Perspektivdarstellungen der Funktionsweise des erfindungsgemäßen Lagersystems bei der Bereitstellung von Lagergutträgern an einer Bereitstellungsstation.

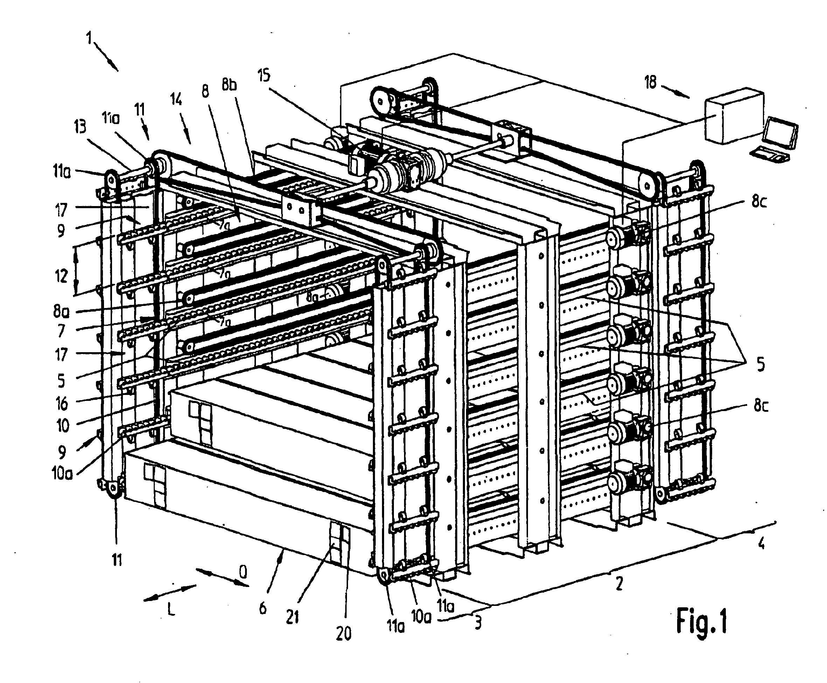

Zunächst wird der Aufbau eines erfindungsgemäßen Lagersystems mit Bezug auf die Fig. 1 beschrieben.

Die Fig. 1 zeigt eine schematische Perspektivdarstellung eines erfindungsgemäßen Horizontal-Umlauflagersystems 1. Das Horizontal-Umlauflagersystem 1 weist einen Lagerbereich 2 auf. Der Lagerbereich 2 liegt zwischen zwei Vertikalfördereinrichtungen 3, 4, die sich in Längsrichtung des Lagerbereichs 2 jeweils an dessen Ende befinden.

Der Lagerbereich 2 ist in eine in vertikaler Richtung Mehrzahl von Lagerebenen 5 unterteilt, die sich jeweils in horizontaler Richtung erstrecken. Dabei ist die Anzahl der Lagerebenen 5 vorzugsweise geringer als die Anzahl der maximal in einer Lagerebene aufnehmbaren Lagergutträger, so dass in horizontaler Richtung mehr Lagergut aufnehmbar ist als in vertikaler Richtung.

In dem Horizontal-Umlauflagersystem 1 ist Lagergut, wie beispielsweise Montageteile, Werkzeuge oder Waren, in beweglichen Lagergutträgem 6 aufgenommen. Die Lagergutträger 6 sind in den Lagerebenen 5 des Lagerbereichs 2 in horizontaler Richtung hintereinander angeordnet und erstrecken sich in Querrichtung vorzugsweise über die gesamte Breite des Lagerbereichs.

Die Lagergutträger 6 sind in den einzelnen Lagerebenen 5 durch ein Stützmittel, beispielsweise in Form eines Schienensystems 7 gehalten, auf dem sich die Lagergutträger 6 in Längsrichtung verschieblich abstützen. Das Schienensystem 7 weist eine Mehrzahl übereinander liegender, horizontal verlaufender Schienen 7a auf, wobei jede Lagerebene 5 durch ein Schienenpaar an den beiden in Querrichtung Q des Lagerbereichs 2 liegenden Seiten gebildet ist.

Jeder Lagerebene 5 ist eine Horizontalfördereinrichtung 8 zugeordnet, durch welche die Lagergutträger 6 einer Lagerebene in Längsrichtung L des Lagerbereichs, also in Richtung zu oder weg von den Vertikalfördereinrichtungen 3, 4, verschieblich sind. Die Horizontalfördereinrichtungen 8 können dabei Zugmittelgetriebe 8a aufweisen, die beispielsweise in Querrichtung an jeder Seite einer Lagerebene 5, im Bereich der Schienen 7a, angeordnet ist und sich in Längsrichtung des Lagerbereichs 2 über einen Teil der Lagerebene, vorzugsweise mehr als die Hälfte einer Lagerebene, bis nahe zu den Vertikalfördereinrichtungen 3, 4 erstreckt. Insbesondere kann das Zugmittelgetriebe 8a Rollenketten 8b zu beiden Seiten umfassen. Wie ferner in Fig. 1 dargestellt ist, kann jede Horizontalfördereinrichtung 8 bzw. jedes Zugmittelgetriebe 8a ferner einen eigenen Antrieb 8c aufweisen.

Der Aufbau der beiden Vertikalfördereinrichtungen 3, 4 ist im Wesentlichen gleich, so dass im Folgenden beispielhaft nur auf den Aufbau der in Fig. 1 vorderen Vertikalfördereinrichtung 3 eingegangen ist. Für den Aufbau, der in Fig. 1 hinteren Vertikalfördereinrichtung 4 gilt die folgende Beschreibung entsprechend.

Die Vertikalfördereinrichtung 3 verbindet die in Längsrichtung gelegenen Enden der Lagerebenen 5 in vertikaler Richtung so miteinander, dass die Lagergutträger 6 von einer Lagerebene 5 in eine andere darunter oder darüber liegende Lagerebene 5 transportiert werden können. Dabei ist die Vertikalfördereinrichtung 3 einschachtig aufgebaut und erlaubt so die Bewegung der Lagergutträger jeweils nur in eine Richtung. Bei der Ausgestaltung der Fig. 1 kann zudem jeweils nur ein einzelner Lagergutträger 6 in einer Transportebene der Vertikalfördereinrichtung aufgenommen werden.

Die Vertikalfördereinrichtung 3 kann mehrere übereinander liegende Transportebenen 9 aufweisen, in denen jeweils Lagergutträger 6 aufnehmbar sind. Die Transportebenen 9 können von einem Schienensystem 10 mit Schienen 10a gebildet sein, das insbesondere identisch zum Schienensystem 7 des Lagerbereichs 8 ausgebildet sein kann, wie dies in Fig. 1 gezeigt ist. Der Abstand der Transportebenen 9 voneinander entspricht dabei dem Abstand der Lagerebenen 5.

Die Vertikalfördereinrichtung 3 kann ebenfalls ein oder mehrere Zugmittelgetriebe 11 mit einem oder mehreren Zugmitteln 11a aufweisen, an denen das Stützmittel, insbesondere das Schienensystem 10, mit dem Zugmittel umlaufend angebracht ist. Insbesondere kann, wie beim Schienensystem 7 des Lagerbereichs 2 an jeder Seite des Lagersystems 1 ein Zugmittelgetriebe 11a angebracht sein.

Die Vertikalfördereinrichtung 3 erstreckt sich über die gesamte Höhe des Lagerbereichs 2 und ist über die Länge des Zugmittels 11 mit einer Vielzahl von Schienen 10a in einem Abstand 12 voneinander versehen, der dem vorzugsweise konstanten Abstand der Schienen 7a der einzelnen Lagerebenen 5 entspricht. Auf diese Weise werden jeweils die Schienen 7a der Lagerebenen 5 des Lagerbereichs 2 mit den Schienen 10 der Vertikalfördereinrichtung 3 in Flucht gebracht, wenn sich diese um einen Abstand 12 weiterbewegt hat.

Die Vertikalfördereinrichtung 3 umfasst insbesondere in der in Fig. 1 dargestellten Ausgestaltung an den beiden in Querrichtung Q liegenden Seiten jeweils zwei vertikal angeordnete Zugmittelgetriebe 11 in Form von Ketten oder Riemen, die in Längsrichtung L beabstandet sind und zwischen denen sich die Schienen 10a in horizontaler Richtung erstrecken. Das Lasttrum der Zugmittelgetriebe 11 ist der Innenseite des Horizontal-Umlauflagersystems 1 zugewandt, das Leertrum der Außenseite. Diese beiden Zugmittelgetriebe sind über eine Welle 13 starr miteinander verbunden, so dass sie sich stets mit der gleichen Geschwindigkeit drehen. Über ein weiteres Getriebe 14, beispielsweise ebenfalls ein Zugmittelgetriebe, sind die Zugmittelgetriebe 11 an den beiden Querseiten miteinander und mit einem Antrieb 15 verbunden. Dabei ist vorzugsweise jeder Vertikalfördereinrichtung 3, 4 ein eigener Antrieb 15 zugeordnet.

Werden die Vertikalfördereinrichtungen 3, 4 betätigt, so laufen die Schienen 10a mit den Zugmitteln 11a vertikal um. Um diese Bewegung zu erleichtern, wenn das Schienensystem 10 der Vertikalfördereinrichtung 3 eine durch das Gewicht eines Lagergutträgers 6 belastet ist, sind in vertikaler Richtung abrollende Rollen 16 am Schienensystem vorgesehen, welche sich an einer Vertikallauffläche 17 abstützen. Vorzugweise ist an jeder Schiene 10a wenigstens eine solche Rolle 16 unterhalb der Auflagefläche 17, auf denen die Lagergutträger 6 aufliegen, angeordnet, so dass sie durch das Gewicht der Lagergutträger 6 gegen die Lauffläche 17 gedrückt werden und einen Teil der Gewichtslast tragen.

Um die von den Vertikalfördereinrichtungen 3, 4 zurückzulegenden Wege und damit auch die Transportzeiten zu verkürzen, kann die Anzahl der hintereinander in einer Lagerebene anordenbaren Lagergutträger größer sein als die Höhe der Vertikalfördereinrichtungen, ausgedrückt in der Anzahl der dieser Höhe übereinander anordenbaren Lagergutträger.

Die Lagergutträger 6 des Horizontal-Umlauflagersystems 1 können, wie in Fig. 1 dargestellt ist, als oben offene Behälter ausgebildet sein, in denen Lagergut eingelegt wird. Es können jedoch auch flache Tableaus oder geschlossene Behälter verwendet werden. Jeder Lagergutträger ist vorzugsweise an seiner einen Längsrichtung gelegenen Stirnflächen mit wenigstens einer Kupplung 20 und wenigstens einer Auflauffläche 21 versehen, auf deren genauen Funktion im Text weiter unten näher eingegangen ist.

Die Steuerung der Antriebe 8c, 15 der Horizontalfördereinrichtungen, und Vertikalfördereinrichtungen wird von einer vorzugsweise programmierbaren Steuereinheit 18, beispielsweise einem Computer, übernommen, welche auch die Lagerverwaltung übernimmt. Die Steuereinheit 18 steuert die Antriebe 8c, 15 unabhängig voneinander und wählt eine derartige Kombination dieser Antriebe, dass auf einen beliebigen Lagergutträger im Lagerbereich 2 zugegriffen werden kann.

Wird anstelle mehrerer Antriebe 8c, 15 ein zentraler Antrieb (oder mehrere zentrale Antriebe) verwendet, so kann die Steuereinheit 18 auch die Steuerung der Kupplungen übernehmen, mit der die Antriebsbewegung des Antriebs auf die einzelnen Lagerebenen und Vertikalfördereinrichtungen verteilt wird.

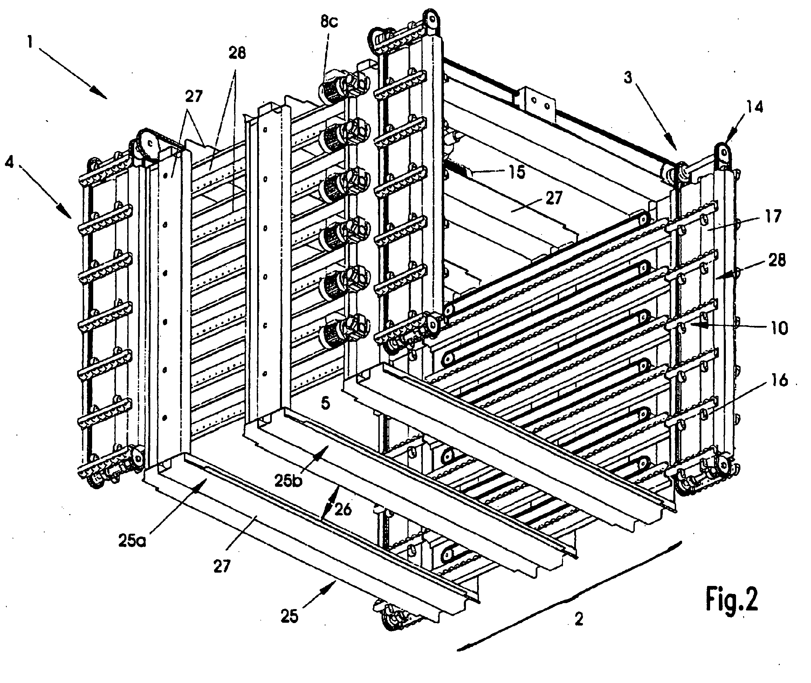

Die Fig. 2 zeigt in einer schematischen Perspektivansicht das Horizontal-Umlagersysterm der Fig. 1 ohne die Lagergutträger 6, um den Aufbau der Tragestruktur näher zu erläutern. Es werden im Folgenden dieselben Bezugszeichen wie in Fig. 1 verwendet.

Der Lagerbereich 2 ist durch eine Rahmenkonstruktion 25 gebildet, welche den Lagerbereich 2 in Querrichtung umgibt. Die Rahmenkonstruktion 25 weist mehrere in einem Abstand 26 angeordnete Einzelrahmen 25a, 25b auf, wobei sich die Anzahl und der Abstand 26 der Einzelrahmen aus der Länge des Lagerbereichs 2 in Längsrichtung und dessen Höhe sowie den zu erwartenden Traglasten ergibt. Die Einzelrahmen 25a, 25b sind aus vier Profilträgern 27 aufgebaut, wobei jeweils ein Profilträger am Boden und an der Decke des Lagerbereichs und jeweils ein Profilträger an einer Seite des Lagerbereichs angeordnet ist, so dass der Lagerbereich 2 von den Profilträgern 27 aufgespannt und umschlossen ist. An den seitlichen Profilträgern 27 sind horizontal in Längsrichtung verlaufende Längsträger 28 angebracht, welche die Stützmittel 7 der einzelnen Lagerebenen 5 tragen. Die Antriebe 8c der Horizontalfördereinrichtungen sind vorzugsweise an einem seitlichen Profilträger 27 an dessen vom Lagerbereich 2 abgewandten Seite angebracht. Die Antriebe 15 für die Vertikalfördereinrichtungen 3, 4 sind auf einem der Deckenträger 27 angebracht.

Jeweils ein Rahmen ist an den beiden in Längsrichtung des Horizontal-Umlauflagersystems 1 gelegenen Enden des Lagerbereichs 2 angeordnet. An den seitlichen Profilträgern 27 dieser Rahmen sind die Vertikalfördereinrichtüngen 3, 4 angebracht. Das Zugmittelgetriebe 14 mit dem Schienensystem 10 und den Laufflächen 17 für die Rollen 16 ist dabei zu einem einstückig handhabbaren Modul vormontiert, das identisch an jeder Seite jeweils paarweise am Ende angeordnet ist und an den seitlichen Profilträgern 27 angebracht wird. Die Laufflächen 17 werden dabei von senkrechten Profilträgern 28 gebildet, die das Gewicht der Ladegutträger 6 auf den Vertikalfördereinrichtungen 3, 4 aufnehmen und vorzugsweise Teil des vormontierten Moduls sind.

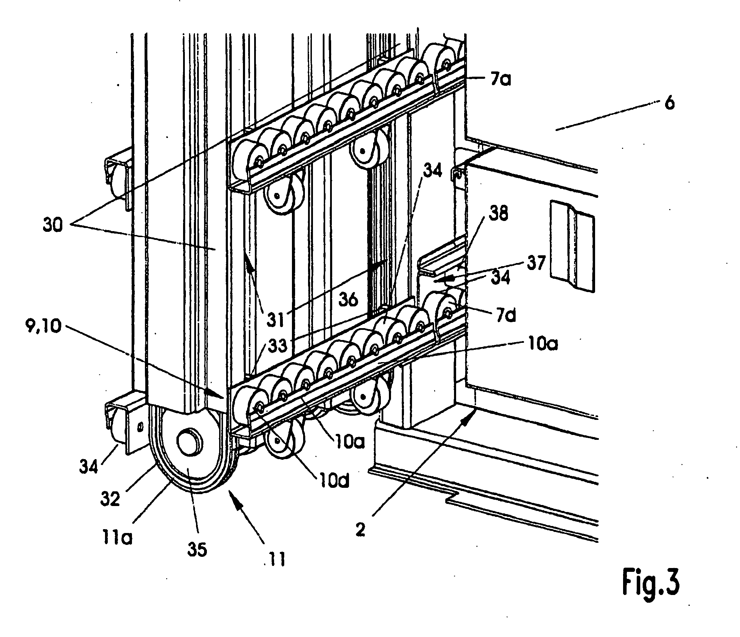

In Fig. 3 ist ein Detail des unteren Bereichs einer Seite der Vertikalfördereinrichtung 3 in einer schematischen Perspektivdarstellung gezeigt. Es werden die gleichen Bezugszeichen wie oben verwendet.

Wie in Fig. 3 zu erkennen ist, läuft das Zugmittel 11a im Bereich des Lagerbereichs 2 unter einer dem Innenraum des Horizontal-Umlauflagersystems zugewandten Abdeckung 30, welche einen sich in Längsrichtung öffnenden Spalt 31 an den Flanken 32 des Zugmittels 11a, vorzugsweise einer Kette, offen lässt. An den jeweils zueinander weisenden Flanken des Zugmittels 11a sind Befestigungsmittel 33 angebracht, welche die Schienen 10a mit den Zugmitteln 11a verbinden.

Die Rollen 10d der Transportebenen bzw. des Schienensystems 10 sind so angeordnet, dass sie eine Auflagefläche 34 für die Lagergutträger 6 bilden und in Flucht mit der von den Rollen des lagerbereichsseitigen Schienensystems gebildeten Auflagefläche 34 gebracht werden können. Beim Umlauf der Schienen 10 mit dem Zugmittel 11a weist die Auflagefläche 34 auf der entgegengesetzten Seite des Schienenlifts entsprechend nach unten, da die Schienen 10a zusammen mit dem Zugmittel 11a über Rollen 35 an den beiden in senkrechter Richtung gelegenen Enden des Schienenliftes umgelenkt werden.

Wie in Fig. 3 ferner zu erkennen ist, sind die Schienen 7a des Lagerbereichs 2 oben mit einer Abdeckung 36 versehen, welche im Abstand über der Auflagefläche 34 parallel zu den Rollen 7d des Schienensystems 7 verläuft. Auf diese Weise ist eine in Längsrichtung verlaufende Aufnahmenut 37 gebildet, in der Haltevorsprünge 38, über deren Unterflächen sich die Lagergutträger 6 auf dem Stützmittel 7, 10 abstützen, geführt sind.

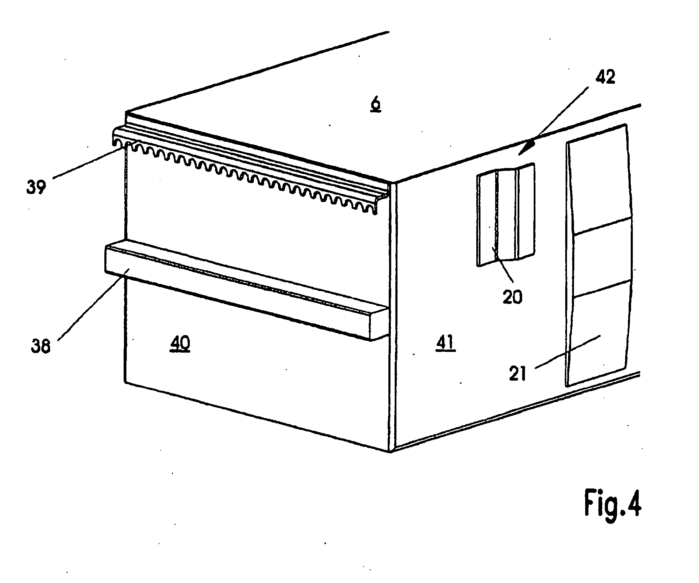

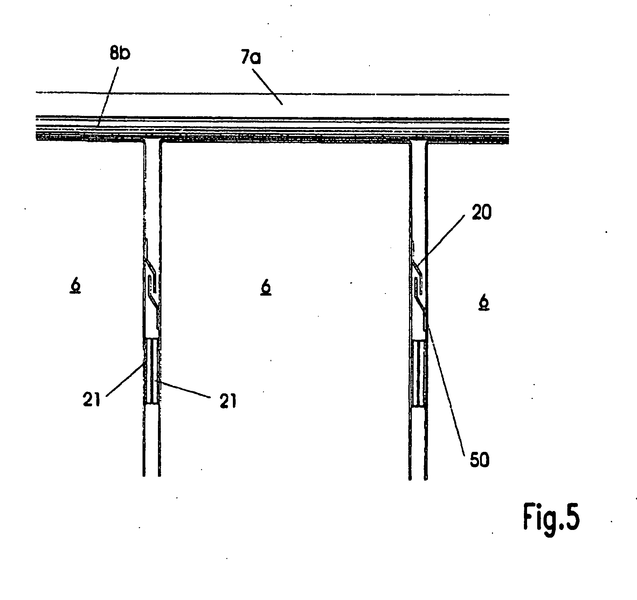

Der Aufbau der Lagergutträger wird nun mit Bezug auf die Fig. 4 erläutert. Dabei zeigt die Fig. 4 einen Lagergutträger 6, wie er bei dem Horizontal-Umlauflagersystem 1 gemäß einer der obigen Figuren eingesetzt werden kann, in einer schematischen Perspektivansicht. Fig. 5 zeigt die Lagergutträger 6 einer Lagerebene in einer Draufsicht. Es werden die Bezugszeichen der Fig. 1 bis 3 verwendet, soweit die entsprechenden Elemente hinsichtlich Funktion und Aufbau übereinstimmen.

An seinen in Querrichtung liegenden Seitenflächen 40 ist der Lagergutbehälter 6 mit einem sich über die gesamte Tiefe des Lagergutbehälters in Längsrichtung erstreckenden Haltevorsprung 38 versehen. Wie oben ausgeführt ist, stützt sich der Lagergutbehälter 6 mit dem Haltevorsprung 38 auf den Stützmitteln 7, 10 ab. Ferner weist der Lagergutträger 6 ein Zahnprofil 39 auf, dessen Zahnform und -teilung so bemessen sind, dass es mit dem als Rollenkette ausgestalteten Zugmittel 18 der Horizontalfördereinrichtung 8 in Eingriff gelangt.

An seiner einen in Längsrichtung weisenden Stirnfläche 41 - in Fig. 4 ist lediglich eine der beiden Stirnflächen zu erkennen - ist der Lagergutträger 6 an jeder Seite mit der Kupplung 20 und der Auflauffläche 21 versehen.

Die Kupplung 20 ist als ein vorkragendes Winkelprofil ausgestaltet, das in Längsrichtung von der Stirnfläche 41 wegragt, und eine Kupplungslasche mit einem sich in Vertikalrichtung und in Querrichtung nach innen öffnenden Spalt 42 bildet. An der in Fig. 4 nicht dargestellten rückseitigen Stirnfläche des Lagergutträgers 6 ist ein Paar von entsprechenden Gegenkupplung 50 (Fig. 5) angeordnet, welche ausgestaltet ist, in den Spalt 42 einzugreifen, indem sie ebenfalls als Kupplungslasche mit einem Winkelprofil mit einem sich quer nach außen öffnenden Spalt bildet. Wie ferner in Fig. 5 zu erkennen ist, ist auch an der rückwärtigen Stirnfläche ein Paar von Auflaufflächen an derselben Stelle wie an der Stirnfläche 41 vorgesehen.

Fig. 5 zeigt die Kupplung 20 und die Gegenkupplung 50 miteinander im Eingriff, so dass die Lagergutträger 6 einer Lagerebene 5 eine Horizontalkraft, insbesondere eine Zugkraft, übertragend miteinander verbunden sind.

Die Auflaufflächen 21 zweier benachbarter Lagergutträger 6 liegen einander gegenüber und dienen als Puffer und Abstandshalter zwischen den Lagergutträgem. Sie können insbesondere aus einem Kunststoff wie beispielsweise Hartgummi gefertigt sein.

Wie in Fig. 4 zu erkennen ist, flachen sich die Auflaufflächen 21 jeweils in senkrechter Richtung zu den Rändern hin ab und weisen in ihrem Mittenbereich die größte Dicke auf, so dass sich die Lagergutträger in senkrechter Richtung ohne Verhaken aneinander vorbei bewegen können.

Die Kupplung 20 und die Gegenkupplung 50 sind voneinander auf einfache Weise lösbar, wenn sich die beiden Lagergutträger, beispielsweise durch die Vertikalfördereinrichtungen 3, 4, relativ zueinander in vertikaler Richtung voneinander wegbewegen. Außerdem kann ein Lagergutträger an einem anderen in senkrechter Richtung vorbeitransportiert werden, ohne dass die Kupplung 20, 50 diese Bewegung behindert, da sich die Winkelprofile einfach aneinander vorbei in die und aus der horizontalen Überlappung vorbei bewegen.

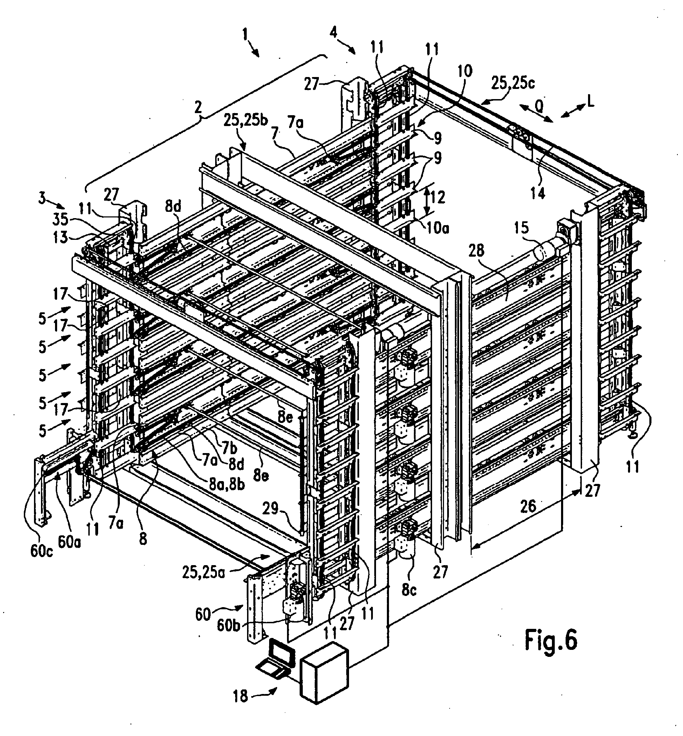

In den Fig. 6 bis 10 ist eine weitere Ausführungsform des Horizontal-Umlauflagersystems 1 gezeigt. In der folgenden Beschreibung werden die Bezugszeichen der Ausführungsform der Fig. 1 bis 5 verwendet, soweit die damit bezeichneten Elemente in Funktion und/oder Aufbau übereinstimmen.

Die Fig. 6 zeigt eine schematische Perspektivdarstellung eines erfindungsgemäßen Horizontal-Umlauflagersystems 1, wobei sämtliche Verkleidungen entfernt sind, um den Blick auf den Innenraum freizugeben. Das Horizontal-Umlauflagersystem 1 weist einen Lagerbereich 2 auf. Der Lagerbereich 2 liegt zwischen zwei Vertikalfördereindchtungen 3, 4, die sich in Längsrichtung L des Lagerbereichs 2 jeweils an dessen Ende befinden.

Der Lagerbereich 2 ist in eine in vertikaler Richtung Mehrzahl von Lagerebenen 5 unterteilt, die sich jeweils in horizontaler Richtung erstrecken. Dabei ist die Anzahl der Lagerebenen 5 vorzugsweise geringer als die Anzahl der maximal in einer Lagerebene aufnehmbaren Lagergutträger, so dass in horizontaler Richtung mehr Lagergut aufnehmbar ist als in vertikaler Richtung.

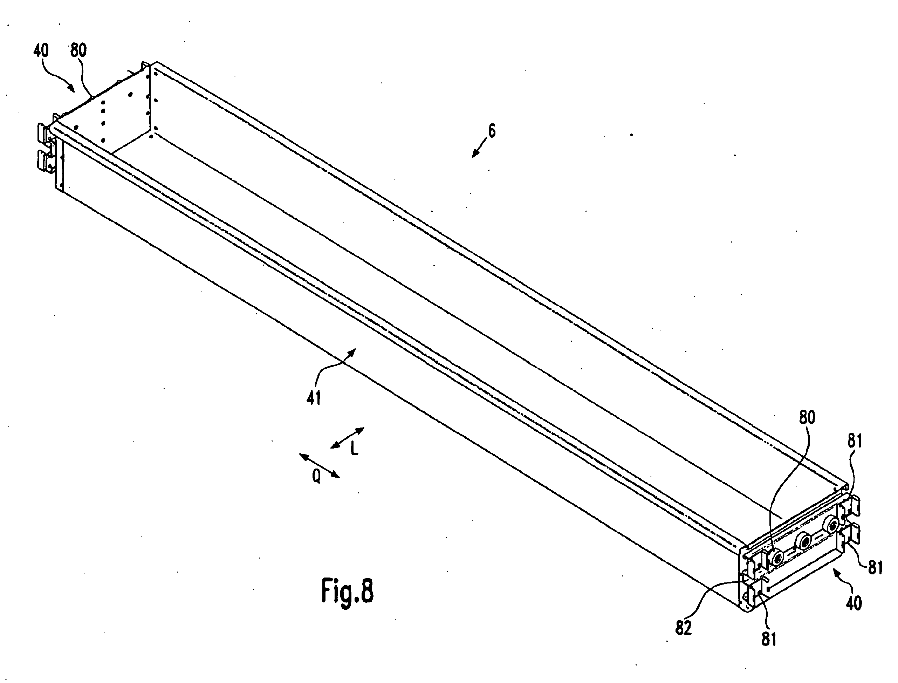

In dem Norizontal-Umlauflagersystem 1 ist Lagergut, wie beispielsweise Montageteile, Werkzeuge oder Waren, in beweglichen Lagergutträgern 6 aufgenommen. Ein Lagergutträger 6-ist in einer schematischen Perspektivdarstellung in Fig. 8 dargestellt. Die. Lagergutträger 6 sind in den Lagerebenen 5 des Lagerbereichs 2 in horizontaler Richtung hintereinander angeordnet und erstrecken sich in Querrichtung Q vorzugsweise über die gesamte Breite des Lagerbereichs.

Die Lagergutträger 6 sind in den einzelnen Lagerebenen 5 durch ein Stützmittel, beispielsweise in Form eines Schienensystems 7 gehalten, auf dem sich die Lagergutträger 6 in Längsrichtung verschieblich abstützen. Das Schienensystem 7 weist eine Mehrzahl übereinander liegender, horizontal verlaufender Schienen 7a auf, wobei jede Lagerebene 5 durch ein Schienenpaar an den beiden in Querrichtung Q des Lagerbereichs 2 liegenden Seiten gebildet ist. Bei der in Fig. 5 dargestellten Ausführung sind die Schienen 7a von jeweils einem Schenkel eines C-Profils 7b gebildet, und zwar in aufeinanderfolgenden Lagerebenen abwechselnd von einem oberen und einem unteren Schenkel zweier übereinanderliegender C-Profile 7b.

Jeweils wenigstens einem Paar von Lagerebenen 5 ist eine Horizontalfördereinrichtung 8 zugeordnet, durch welche die Lagergutträger 6 einer Lagerebene in Längsrichtung L des Lagerbereichs, also in Richtung zu oder weg von den Vertikalfördereinrichtungen 3, 4, verschieblich sind. Die Horizontalfördereinrichtungen 8 können dabei Zugmittelgetriebe 8a aufweisen, die beispielsweise in Querrichtung an jeder Seite einer Lagerebene 5, im Bereich der Schienen 7a, angeordnet ist und sich in Längsrichtung des Lagerbereichs 2 über einen Teil der Lagerebene bis zu den Vertikalfördereinrichtungen 3, 4 erstrecken. Insbesondere kann das Zugmittelgetriebe 8a Zugmittel, wie Ketten 8b, zu beiden Seiten des Lagerbereichs umfassen. Wie ferner in Fig. 1 dargestellt ist, kann jede Horizontalfördereinrichtung 8 bzw. jedes Zugmittelgetriebe 8a ferner einen eigenen Antrieb 8c aufweisen. An den Zugmitteln 8b sind Mitnehmer 8c angeordnet.

Jede Horizontalfördereinrichtung 8 erstreckt sich über beispielsweise zwei in vertikaler Richtung benachbarte Lagerebenen 5. Wie in Fig. 1 gezeigt ist, kann dies dadurch erreicht werden, dass ein erstes und ein zweites Trum des Kettentriebs 8a entlang der beiden Schienen 7a dieser Lagerebenen geführt ist. Dadurch ergibt sich eine mechanische Zwangskopplung des Antriebs der beiden durch die Honzontalfördereinrichtung 8 angetriebenen Lagerebenen, wobei die Förderrichtung in der einen Lagerebene umgekehrt zur Förderrichtung der anderen Lagerebene verläuft. Die Horizontalfördereinrichtung 8 eines Paars von Lagerebenen ist, wie in Fig. 5 erkennbar, in vertikaler Richtung zwischen den C-Profilen 7b dieses Paars angeordnet, so dass sich in senkrechter Richtung jeweils eine Horizontalfördereinrichtung und zwei Schienen abwechseln.

Die beiden Kettentriebe 8 an den beiden Seiten des Lagerbereichs 20 sind symmetrisch aufgebaut und durch den Antrieb 8c angetrieben. Über eine Koppelstange 8e sind die Kettentriebe 8 zu beiden Seiten miteinander synchronisiert. Die Koppelstange 8e erstreckt sich zwischen den Lagerebenen in Querrichtung. Q über die gesamte Breite des Lagerbereichs. Sämtliche Horizontalfördereinrichtungen 8 des Horizontal-Umlaufsystems 1 sind gleich aufgebaut.

Der Aufbau der beiden Vertikalfördereinrichtungen 3, 4 ist ebenfalls im Wesentlichen gleich, so dass im Folgenden beispielhaft nur auf den Aufbau der in Fig. 6 vorderen Vertikalfördereinrichtung 3 eingegangen ist. Für den Aufbau, der in Fig. 6 hinteren Vertikalfördereinrichtung 4 gilt die folgende Beschreibung entsprechend.

Die Vertikalfördereinrichtung 3 verbindet die in Längsrichtung gelegenen Enden der Lagerebenen 5 in vertikaler Richtung so miteinander, dass die Lagergutträger 6 von einer Lagerebene 5 in eine andere darunter oder darüber liegende Lagerebene 5 transportiert werden können. Dabei ist die Vertikalfördereinrichtung 3 einschachtig aufgebaut: Sie erlaubt die Bewegung der Lagergutträger jeweils nur in eine Richtung. Bei der Ausgestaltung der Fig. 6 ist die Tiefe der Vertikalfördereinrichtung so bemessen, dass nur ein einzelner Lagergutträger 6 in einer Transportebene der Vertikalfördereinrichtung aufgenommen werden kann.

Die Vertikalfördereinrichtung 3 kann mehrere übereinander liegende Transportebenen 9 aufweisen, in denen jeweils Lagergutträger 6 aufnehmbar sind. Die Transportebenen 9 können von einem Schienensystem 10 mit Schienen 10a beispielsweise aus einem Winkelprofil gebildet sein. Der Abstand der Transportebenen 9 in der Vertikalfördereinrichtung 3 voneinander entspricht dabei dem Abstand der Lagerebenen 5.

Die Vertikalfördereinrichtung 3 kann ebenfalls ein oder mehrere Zugmittelgetriebe 11 mit einem oder mehreren Zugmitteln 11a aufweisen, an denen das Stützmittel, insbesondere das Schienensystem 10, mit dem Zugmittel umlaufend angebracht ist. Insbesondere kann, wie beim Schienensystem 7 des Lagerbereichs 2 an jeder Seite des Lagersystems 1 wenigstens ein Zugmittelgetriebe 11a angebracht sein.

Die Vertikalfördereinrichtung 3 erstreckt sich über die gesamte Höhe des Lagerbereich 2 und ist über die Länge des Zugmittels 11 mit einer Vielzahl von Schienen 10a in einem Abstand 12 voneinander versehen, der dem vorzugsweise konstanten Abstand der Schienen 7a der einzelnen Lagerebenen 5 entspricht. Auf diese Weise werden jeweils die Schienen 7a der Lagerebenen 5 des Lagerbereichs 2 mit den Schienen 10a der Vertikalfördereinrichtung 3 in Flucht gebracht, wenn sich diese um einen Abstand 12 weiterbewegt hat.

Die Vertikalfördereinrichtung 3 umfasst insbesondere in der in Fig. 6 dargestellten Ausgestaltung an den beiden in Querrichtung Q liegenden Seiten jeweils zwei vertikal angeordnete Zugmittelgetriebe 11 in Form von Ketten oder Riemen, die in Längsrichtung L beabstandet sind und zwischen denen sich die Schienen 10a in horizontaler Richtung erstrecken. Das Lasttrum der Zugmittelgetriebe 11 ist der Innenseite des Horizontal-Umlauflagersystems 1 zugewandt, das Leertrum der Außenseite. Die Zugmittelgetriebe 11 auf einer Seite des Horizontal-Umlauflagersystems sind über eine Welle 13 starr miteinander verbunden, so dass sie sich stets mit der gleichen Geschwindigkeit drehen. Über ein weiteres Getriebe 14, beispielsweise ebenfalls ein Zugmittelgetriebe, sind die Zugmittelgetriebe 11 an den beiden Querseiten miteinander und mit einem Antrieb 15 verbunden. Das Getriebe 14 erstreckt sich in Querrichtung Q über die gesamte Breite des Horizontal-Umlauflagersystems 1. Dabei ist vorzugsweise jeder Vertikalfördereinrichtung 3, 4 ein eigener Antrieb 15 zugeordnet.

Werden die Vertikalfördereinrichtungen 3, 4 betätigt, so laufen die Schienen 10a mit den Zugmitteln 11a vertikal um. Um diese Bewegung zu erleichtern, wenn das Schienensystem 10 der Vertikalfördereinrichtung 3 durch das Gewicht eines Lagergutträgers 6 belastet ist, sind in vertikaler Richtung abrollende Rollen 16 vorgesehen, welche sich an einer Vertikallauffläche 17 abstützen.

Um die von den Vertikalfördereinrichtungen 3, 4 zurückzulegenden Wege und damit auch die Transportzeiten zu verkürzen, kann die Anzahl der in einer Lagerebene hintereinander anordenbaren Lagergutträger größer sein als die Anzahl der Lagergutebenen 5.

Die Steuerung der Antriebe 8c, 15 der Horizontalfördereinrichtungen und Vertikalfördereinrichtungen wird von einer vorzugsweise programmierbaren Steuereinheit 18, beispielsweise einem Computer, übernommen, welche auch die Lagerverwaltung übernimmt. Die Steuereinheit 18 steuert die Antriebe 8c, 15 unabhängig voneinander und wählt eine derartige Kombination dieser Antriebe, dass auf einen beliebigen Lagergutträger im Lagerbereich 2 zugegriffen werden kann. Wird anstelle mehrerer Antriebe 8c, 15 ein zentraler Antrieb (oder mehrere zentrale Antriebe) mit Kupplungen verwendet, so kann die Steuereinheit 18 auch die Steuerung der Kupplungen übernehmen, mit der die Antriebsbewegung des Antriebs auf die einzelnen Lagerebenen und Vertikalfördereinrichtungen verteilt wird. Sämtliche Antriebe 8c, 15 sind an einer Seite des Horizontal-Umlauflagersystems 1 angeordnet.

Der Lagerbereich 2 ist durch eine Rahmenkonstruktion 25 gebildet, welche den Lagerbereich 2 in Querrichtung umgibt. Die Rahmenkonstruktion 25 weist mehrere in einem Abstand 26 angeordnete Einzelrahmen 25a, 25b auf, wobei sich die Anzahl und der Abstand 26 der Einzelrahmen aus der Länge des Lagerbereichs 2 in Längsrichtung und dessen Höhe sowie den zu erwartenden Traglasten ergibt. Die Einzelrahmen 25a, 25b sind aus vier Profilträgern 27 aufgebaut, wobei jeweils ein Profilträger am Boden und an der Decke des Lagerbereichs und jeweils ein Profilträger an einer Seite des Lagerbereichs angeordnet ist, so dass der Lagerbereich 2 von den Profilträgern 27 aufgespannt und umschlossen ist. An den seitlichen Profilträgern 27 sind horizontal in Längsrichtung verlaufende Längsträger 28 angebracht, welche die Stützmittel 7 der einzelnen Lagerebenen 5 tragen. Die Antriebe 8c der Horizontalfördereinrichtungen sind vorzugsweise an einem seitlichen Profilträger 27 an dessen vom Lagerbereich 2 abgewandten Seite angebracht.

Jeweils ein Rahmen ist an den beiden in Längsrichtung des Horizontal-Umlauflagersystems 1 gelegenen Enden des Lagerbereichs 2 angeordnet. An den seitlichen Profilträgern 27 dieser Rahmen sind die Vertikalfördereinrichtungen 3, 4 angebracht. Das Zugmittelgetriebe 14 mit dem Schienensystem 10 ist dabei zu einem einstückig handhabbaren Modul vormontiert, das identisch an jeder Seite jeweils paarweise am Ende angeordnet ist und an den seitlichen Profilträgern 27 angebracht wird. Die Kanäle 17 werden dabei von senkrechten Profilträgern 29 gebildet, die das Gewicht der Ladegutträger 6 auf den Vertikalfördereinrichtungen 3, 4 aufnehmen und vorzugsweise Teil des vormontierten Moduls sind.

Das Horizontal-Umlauflagersystem 1 weist ferner eine Bereitstellungsstation 60 auf, die bezüglich der einen Vertikalfördereinrichtung 3 auf der vom Lagerbereich 2 abgewandten Seite in Längsrichtung L angeordnet ist. An der Bereitstellungsstation 60 findet die Ein- und Auslagerung von Lagergut in den Lagergutträgern 6 statt. Die Bereitstellungsstation 60 ist mit einer eigenen Fördereinrichtung 60a versehen, welche vorzugsweise analog zu den Horizontalfördereinrichtungen 8b aufgebaut ist, so dass auf deren Beschreibung oben verwiesen wird.

In der Bereitstellungsstation 60 liegen die Lagergutträger 6 auf einem Paar von in Querrichtung Q gegenüberliegenden Schienen 60c auf, welche vorzugsweise mit einer Lagerebene 5 des Lagerbereichs 2 fluchten, so dass, ohne Bewegung der Vertikalfördereinrichtung 3 ein Lagergutträger von dieser Lagerebene 5 in die Bereitstellungsstation 60 überführt werden kann. Wie in Fig. 1 zu erkennen ist, weist die Fördereinrichtung 60a der Bereitstellungsstation 60 einen eigenen Antrieb 60b auf, der auf derselben Seite wie die Antriebe 8c, 15 angebracht ist und ebenfalls von der Steuereinrichtung 18 angesteuert ist.

Damit die Lagergutträger 6 auf den Vertikalfördereinrichtungen 3, 4 sowohl von der Fördereinrichtung 60a der Bereitstellungsstation 60 als auch von den Horizontalfördereinrichtungen 8 ergriffen werden können, ragen die Mitnehmer 8d der Fördereinrichtungen 60a und 8 in der Ruhestellung stets in den Bereich der Vertikalfördereinrichtungen, wo sie mit entsprechenden Mitnehmerkupplungen der Lagergutträger in Eingriff gelangen.

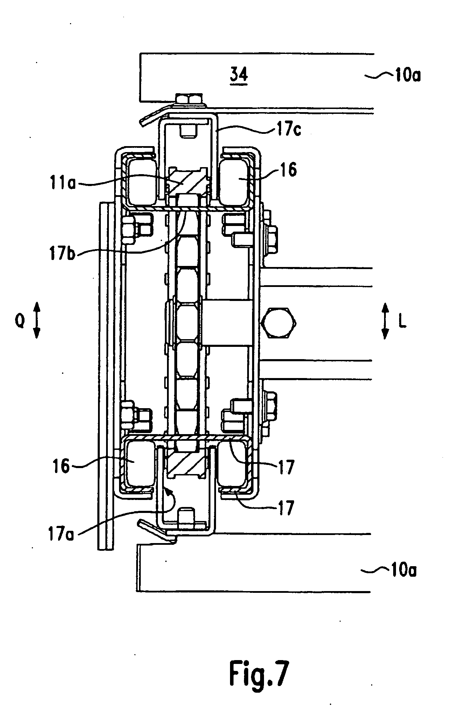

Fig. 7 zeigt einen Horizontalschnitt durch eine Seite einer Vertikalfördereinrichtung 3, 4 in einer schematischen Perspektivdarstellung. Es werden die gleichen Bezugszeichen wie in Fig. 6 verwendet.

Wie in Fig. 7 zu erkennen ist, ist vorzugsweise jeder Schiene 10a ein Rollenpaar 16 zugeordnet, welches in einem Rollenschacht 17a in vertikaler Richtung mit geringem Spiel läuft, so dass es nur eine der beiden Vertikallaufflächen 17 berührt und auf dieser abrollen kann. Der Rollenschacht 17a wird von einem Hohlprofil 17b gebildet, das sich im Wesentlichen über die gesamte Höhe der Vertikalfördereinrichtung 3, 4 sowohl am Lasttrum als auch am Leertrum des Zugmittels 11 erstreckt. Die Rollen 16 sind direkt am Zugmittel 11 angebracht, bei der Verwendung von Ketten als Zugmittel 11 vorzugsweise an denjenigen Kettengliedern, an denen über Befestigungsarme 17c auch die Schienen 10a befestigt sind. Auf diese Weise werden die bei Belastung der Schienen 10a in Querrichtung Q auftretenden Querlasten durch die Rollen 16 und die Vertikallaufflächen 17 aufgefangen. Die Befestigungsarme 17c sind vorzugsweise an wenigstens zwei voneinander beabstandeten Kettengliedern befestigt, um Lastmomente aufzunehmen. Beim Umlauf der Schienen 10a mit dem Zugmittel 11a weist eine Auflagefläche 34 der Schienen 10a, auf der die Lagergutträger 6 sich abstützen, auf der entgegengesetzten Seite des Schienenlifts entsprechend nach unten, da die Schienen über Rollen 35 (vgl. Fig. 1 und 6) an den beiden in senkrechter Richtung gelegenen Enden der Vertikalfördereinrichtungen 3, 4 umgelenkt werden.

Der Aufbau der Lagergutträger wird nun mit Bezug auf die Fig. 8 erläutert. Dabei zeigt die Fig. 8 einen Lagergutträger 6, wie er bei dem Horizontal-Umlauflagersystem 1 gemäß einer der obigen Figuren eingesetzt werden kann, in einer schematischen Perspektivansicht. Es werden die Bezugszeichen der Fig. 6 und 7 verwendet, soweit die Elemente hinsichtlich Funktion und Aufbau übereinstimmen.

An seinen in Querrichtung liegenden Seitenflächen 40 ist der Lagergutbehälter 6 mit in Längsrichtung L hintereinander angeordneten Rollen 80 sowie Mitnehmerkupplungen 81 versehen, die jeweils auf einem sich in Längsrichtung L erstreckenden Profilträger 82 angebracht sein können. Wie in Fig. 8 gezeigt ist, sind an jeder Seitenfläche 40 eines Lagergutbehälters 6 insgesamt vier Mitnehmerkupplungen 81 in Form eines sich weg von den Seitenflächen 40 und nach oben und unten öffnenden U-Profils vorgesehen. Jeweils ein Paar ist an den beiden in Längsrichtung L liegenden Enden der Seitenflächen miteinander fluchtend übereinander angeordnet. Jeweils zwei Mitnehmerkupplungen 81 befinden sich oberhalb der von der Unterseite der Rollen 80 definierten Auflageebene der Lagergutträger 6 auf dem Schienensystem 7, jeweils zwei darunter.

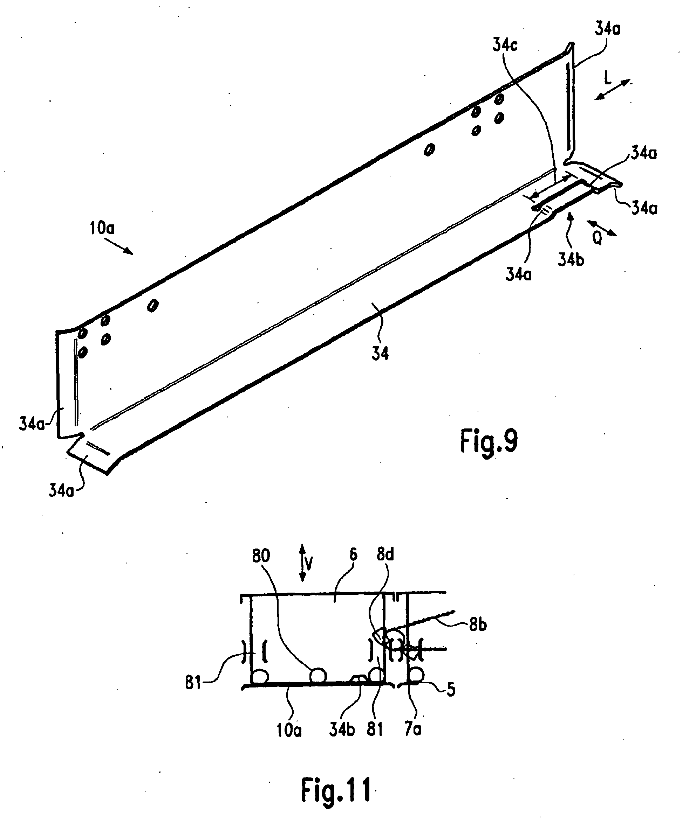

Fig. 9 zeigt eine Schiene 10a einer Vertikalfördereinrichtung in einer schematischen Perspektivansicht. Soweit bereits oben beschriebene Elemente verwendet werden, sind deren Bezugszeichen in Fig. 9 ebenfalls verwendet.

Die Schiene 10a besteht aus einem im Wesentlichen rechtwinklig gebogenem Blechmaterial, das an seinen in Längsrichtung L gelegenen Enden mit Auflaufschrägen 34a versehen ist. Die Auflagefläche 34, auf der im Betrieb die Lagergutträger 6 in der Vertikalfördereinrichtung 3, 4 transportiert werden, ist mit einem Rastmittel, hier einem aus der Vertikalfördereinrichtung 34 nach oben vorspringenden Rastvorsprung 34b, versehen.

Wie in Fig. 9 gezeigt ist, kann der Rastvorsprung 34b aus dem Blechmaterial der Schiene 10a gestanzt sein und an seinen beiden in Längsrichtung gelegenen Enden ebenfalls mit Auflaufschrägen 34a versehen sein.

Die Länge 34c des Vorsprunges 34a ist vorzugsweise kleiner als der oder in etwa gleich dem Abstand der Rollen 80 eines Lagergutträgers. Der Vorsprung 34b dient als Überlaufschutz und Bremse für das Überführen der Lagergutträger 6 vom Lagerbereich 2 auf die Vertikalfördereinrichtung 3, 4, da die Rollen 80 über den Vorsprung 34b bewegt werden müssen.

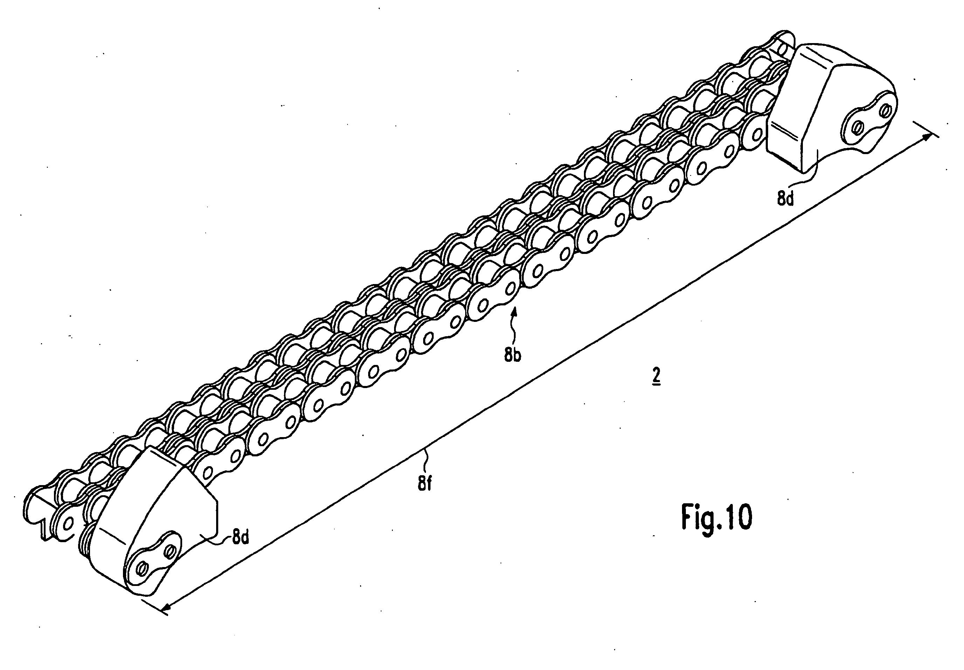

In Fig. 10 ist eine perspektivische Darstellung eines Zugmittels 8b in Form einer Kette der Horizontalfördereinrichtungen gezeigt. An der dem Lagerbereich 2 zugewandten Flanke des Zugmittels 8b sind die Mitnehmer 8d (vgl. Fig. 6) angeordnet. Jeweils ein Paar von Mitnehmern 8d ist dabei in einem Abstand 8e voneinander angeordnet, wobei der Abstand 8e so bemessen ist, dass das Paar von Mitnehmern 8b jeweils in die beiden Aufnahmen 81 (vgl. Fig. 8) eines Lagergutträgers 6 eingefahren werden kann. Zwei aufeinanderfolgende Paare von Mitnehmern 8d sind so angeordnet, dass die Lagergutträger sich nicht berühren. Der Abstand der Mitnehmerpaare bestimmt den Abstand, in den die Lagergutträger 6 auf den Lagerebenen 5 transportiert werden. Dabei gelangen auf einer Lagergutebene 5 oberhalb der ihr zugeordneten Horizontalfördereinrichtung 8 die unteren Mitnehmerkupplungen 81 und auf einer Lagergutebene unterhalb der ihr zugeordneten Horizontalfördereinrichtung die oberen Mitnehmerkupplungen 81 eines Lagergutträgers in Eingriff mit den Mitnehmern 8d.

Wie in Fig. 10 gezeigt ist, ist der Umfang der Mitnehmer 8d unregelmäßig ausgebildet, wobei die beiden Mitnehmer 8d eines Paares spiegelbildlich angeordnet sind.

Die Kontur am Außenumfang des Mitnehmers 8d ergibt sich aus der Funktion des Mitnehmers 8d, während des Umlaufs des Zugmittels 8b in der Horizontalfördereinrichtung in und aus den Mitnehmerkupplungen 81 zu tauchen. Die Form der Mitnehmer 8d erlaubt es außerdem, dass die Mitnehmerkupplung 81 eines auf der Vertikalfördereinrichtung 3, 4 an einer Lagerebene 5 vorbei transportierten Lagergutbehälters 6 den Mitnehmer passieren kann. Diese Situation ist schematisch in einer Seitenansicht in Fig. 11 dargestellt: Der Lagergutträger 6 ist auf einer Schiene 10a einer Vertikalfördereinrichtung 3, 4 durch den Vorsprung 34b rastend gehalten und wird in vertikaler Richtung V an einer Lagerebene 5 vorbei transportiert. In der Ruhestellung ragt der Mitnehmer 8d in den Schacht der Vertikalfördereinrichtung 3 hinein, so dass er in die Mitnehmerkupplungen 81 der Lagergutträger 6 in den Vertikalfördereinrichtungen an beiden Enden des Lagerbereiches 2 eintaucht und diese bei Bedarf in die Lagerebene 5 ziehen kann.

Wird der Lagergutträger 6 an der Lagerebene 5 vorbei transportiert, so passiert der Mitnehmer 8d die Mitnehmerkupplung 81 von oben nach unten, durchfährt also die Mitnehmerkupplungen 81.

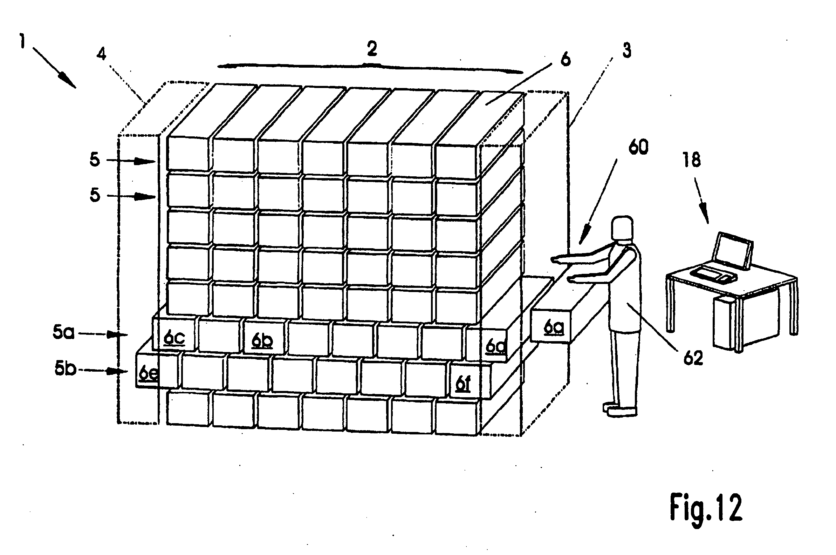

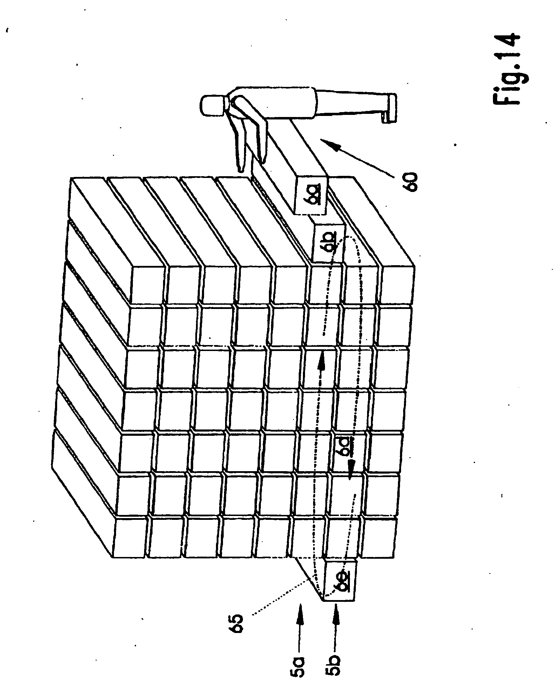

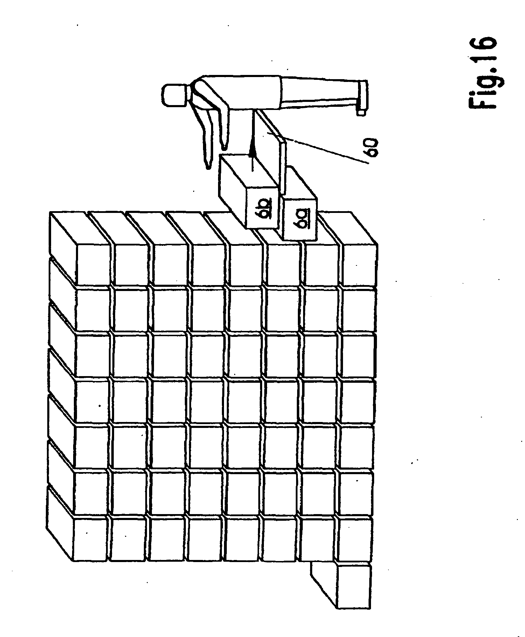

Im Folgenden wird die Funktion des Horizontal-Umlauflagersystems 1, wie es in den Fig. 1 bis 11 dargestellt ist, anhand der Fig. 12 bis 17 erläutert. Die Fig. 12 bis 176 zeigen in einer schematischen Perspektivansicht lediglich die Lagergutträger 6 im Horizontal-Umlauflagersystem 1 ohne die übrigen in den Fig. 1 bis 11 dargestellten Komponenten des Horizontal-Umlauflagersystems 1, um den Bewegungsablauf beim Ein- bzw. Auslagern von Lagergut besser darstellen zu können.

Der Lagerbereich 2 ist an den in Lagerebenen übereinander und in den Lagerebenen hintereinander angeordneten Lagergutbehältern zu erkennen. An den beiden Enden des Lagerbereichs befinden sich die beiden Vertikalfördereinrichtungen 3, 4. Jenseits der vorderen Vertikalfördereinrichtung 3 befindet sich die Bereitstellungsstation 60, an der die Lagergutträger 6 für eine Zugriff von außerhalb des Horizontal-Umlauflagersystems 1 bereitgestellt werden. Die Ebene der Bereitstellungsstation 60 fluchtet vorzugsweise mit einer Lagerebene. An dieser Stelle kann entweder Lagergut manuell oder automatisch ein- bzw. ausgelagert werden. Die Vertikalfördereinrichtung 3 befindet sich zwischen dem Lagerbereich 2 und der Bereitstellungsstation 60. Der Lagerbereich 2 setzt sich bei dem in den Fig. 12 bis 17 dargestellten Ausführungsbeispiel mit wenigstens einer, vorzugsweise zwei oder mehr Lagerebenen 5 unterhalb der Ebene der Bereitstellungsstation fort.

Wie in Fig. 12 zu erkennen ist, ist jede Lagerstelle des Lagerbereichs 2 mit einem Lagergutträger besetzt. Außerdem befindet sich jeweils ein weiterer Lagergutträger in einer Vertikalfördereinrichtung 3, 4 und ein weiterer Lagergutträger 6a in der Bereitstellungsstation 60, so dass das Horizontal-Umlauflagersystem 1 mehr Lagergutträger 6 aufweist als im Lagerbereich aufgenommen werden können. Um nicht einen Lagergutträger 6 in der Bereitstellungsstation zwischen zu lagern, weist das Horizontal-Umlauflagersystem 1 vorzugsweise eine Anzahl von Lagergutträgem 6 auf, die umso viel höher als die Zahl der Lagerstellen im Lagerbereich 2 sind, wie Vertikalfördereinrichtungen 3, 4 vorgesehen sind.

Zu Beginn des beispielhaft beschriebenen Ein- bzw. Auslagerungsvorgangs befindet sich ein zuvor bereitgestellter Lagergutträger 6a in der Bereitstellungsstation 60. Über die Steuereinheit 18, welche die Antriebe 9, 15 des Horizontal-Umlauflagersystems 1 ansteuert, wird von einer Bedienperson 62 vorgegeben, dass für den Zugriff in der Bereitstellungsstation 60 als nächstes der Lagergutträger 6b bestimmt ist. Daraufhin überführt die Steuereinheit 18 das Horizontal-Umlauflagersystem 1 in einen Zustand, in dem ein Horizontalumlauf der Lagergutträger 6 durch wenigstens zwei Lagerebenen 5a, 5b stattfindet.

Hierzu werden die Vertikalfördereinrichtungen 3, 4 jeweils gegenläufig angetrieben, so dass sich die Transportebenen der vorderen Vertikalfördereinrichtung 3 beispielsweise nach unten und die Schienen der hinteren Vertikalfördereinrichtung 4 nach oben bewegen. Sobald eine Transportebene der vorderen Vertikalfördereinrichtung 3 mit einer Schiene 7 der Lagerebene 5a, in der sich der zur Bereitstellung bestimmte Lagergutträger 6b befindet, fluchtet, wird die Horizontalfördereinrichtung 8 dieser Lagerebene in Betrieb gesetzt und die Lagergutträger 6 dieser Lagerebene werden in Richtung der Vertikalfördereinrichtung 3 bewegt, während gleichzeitig der Lagergutträger 6d von der hinteren Vertikalfördereinrichtung 4 aus der Transportebene in die Lagerebene des Lagerbereichs 2 gezogen wird.

Bei der oben beschriebenen Ausgestaltung kann die Horizontalkraft zur Bewegung der Lagergutträger einer Lagerebene an einer beliebigen Stelle der Lagerebene im Lagerbereich 2 eingeleitet werden, da über die Auflaufflächen 21 und die Kupplungen 20, 50 diese Kraft über sämtliche Lagergutträger 6 geleitet wird.

Die Horizontalfördereinrichtung 8 dieser Lagerebene bewegt die Lagergutträger 6 in Richtung der hinteren Vertikalfördereinrichtung 4 bis der hinterste Lagergutträger 6e vollständig auf der Vertikalfördereinrichtung 4 liegt und von dieser nach oben bewegt wird. Im Zuge dieser Bewegung wurde der vorderste Lagergutträger 6f von der vorderen Vertikatfördereinrichtung 3 in den Lagerbereich 2 überführt. Sobald der vorderste Lagergutträger 6d vollständig auf der vorderen Vertikalfördereinrichtung 3 liegt und damit der hinterste Lagergutträger sich vollständig im Lagerbereich 2 befindet, bewegt sich diese um eine Lagerebene nach unten. Gleichzeitig findet eine gegenläufige Bewegung in einer zur Lagerebene 5a benachbarten Lagerebene 5b, beispielsweise der darunter liegenden Lagerebene, statt.

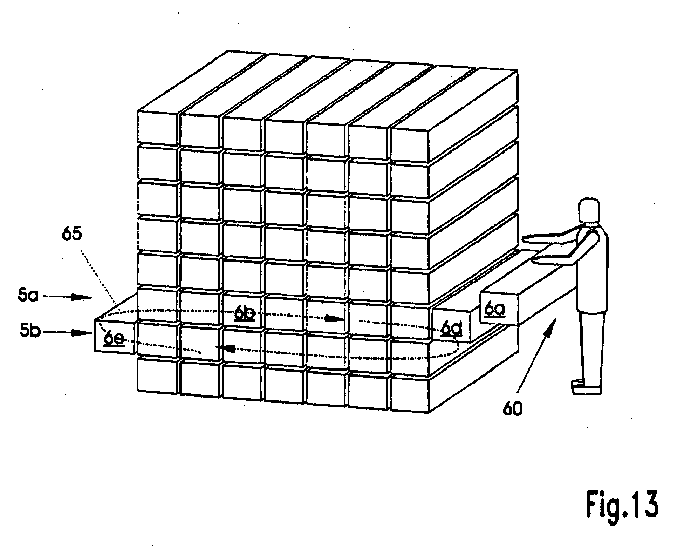

Fig. 13 zeigt den Zustand, in dem der vorderste Lagergutträger 6d der Lagerebene 5a vollständig auf der vorderen Vertikalfördereinrichtung 3 und der hinterste Lagergutträger 6e der Lagerebene 5b vollständig auf der hinteren Vertikalfördereinrichtung 4 liegen.

Als nächstes bewegen sich gleichzeitig die vordere Vertikalfördereinrichtung 3 nach unten und die hintere Vertikalfördereinrichtung 4 nach oben. Sobald sich die Lagergutträger 6d, 6e auf den Vertikalfördereinrichtungen in senkrechter Richtung von ihren jeweiligen Lagerebenen 5a, 5b entfernen, kuppeln sie sich automatisch aus den in den Lagerebenen verbleibenden Lagergutträgem aus. Im Zuge des Transports des vorderen Lagergutträgers 6d in die untere Ebene 5b und des hinteren Lagergutträgers 6e in die obere Ebene 5a kuppeln diese selbständig in die in den jeweiligen Lagerebenen bereits vorhandenen Lagergutträger 6 ein. Anschließend werden die Ebenen wieder, wie oben in Fig. 12 beschrieben ist, in horizontaler Richtung bewegt. Im Zuge dieser Bewegung in den Lagerbereich 2 hinein gelangen die Lagergutträger 6d und 6e in Eingriff mit den jeweiligen Horizontalfördereinrichtungen. So wird ein Patemoster-ähnlicher Horizontalumlauf 65 der Lagergutträger 6 durch die Lagerebenen 5a, 5b erzeugt, bis der zur Bereitstellung bestimmte Lagergutträger 6b von der an die Bereitstellungsstation 60 angrenzenden Vertikalfördereinrichtung 3 übernommen ist. Diese Situation ist in der Fig. 13 dargestellt.

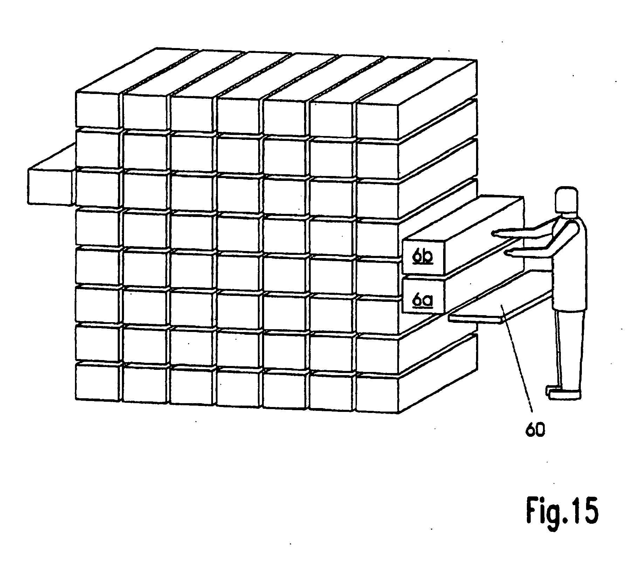

Um den zur Bereitstellung bestimmten Lagergutträger 6b zur Bereitstellungsstation 60 zu befördern, wird zunächst der derzeitig an der Bereitstellungsstation 60 sich befindliche Lagergutträger 6a auf die eine Transportebene der Vertikalfördereinrichtung 3 überführt. Beispielsweise kann der Lagergutträger 6a, wie in Fig. 15 gezeigt ist, unter die Transportebene des als nächsten zur Bereitstellung bestimmten Lagergutträger 6b gefördert werden. Anschließend verfährt die Vertikalfördereinrichtung 3 wieder, bis der zur Bereitstellung bestimmte Lagergutträger 6b auf Höhe der Bereitstellungsstation 60 zu liegen kommt und in horizontaler Richtung zur Bereitstellungsstation 60 transportiert werden kann. Der zuvor bereitgestellte Lagergutträger 6a wird dabei über die Ebene der Bereitstellungsstation 60 hinaustransportiert und steht für den nächsten Horizontalumlauf zur Verfügung.

Der Transport eines Lagergutträgers 6 von der Vertikalfördereinrichtung 3 zur Bereitstellungsstation 60 erfolgt über die Horizontalfördereinrichtung der mit der Bereitstellungsstation fluchtenden Lagerebene. Aufgrund der aneinander gekuppelten Lagergutträger kann ein Lagergutträger über die Vertikalfördereinrichtung hinweg auf die Bereitstellungsstation 60 geschoben oder von dieser weg gezogen werden, wenn die Transportebenen mit den Lagerebenen in Flucht gebracht werden.

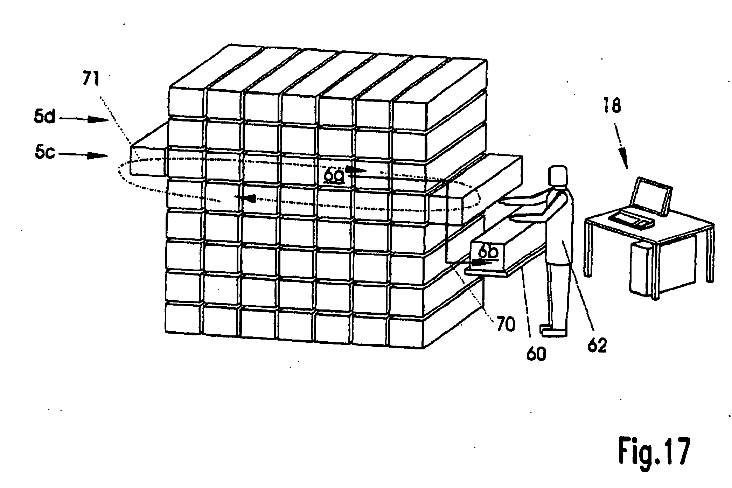

Der anhand der Fig. 12 bis 17 dargestellte Ablauf wiederholt sich, wenn, ausgehend von der Situation der Fig. 17, bei der der zur Bereitstellung bestimmte Lagergutträger 6a an der Bereitstellungsstation 60 bereitliegt, von der Bedienperson 62 ein nächster Lagergutträger 68 zur Bereitstellung bestimmt wird. Der Pfeil 70 zeigt schematisch den Weg dieses Lagergutträgers 6e zur Bereitstellungsstation 60. Hierzu wird der Horizontalumlauf 65 in den Lagerebenen 5c und 5d in der durch die Pfeile 71 angedeuteten Richtung der gegenläufig angetriebenen Horizontalfördereinrichtungen 8 dieser beiden Lagerebenen und den beiden Vertikalfördereinrichtungen 3, 4 erzeugt.

Da die Vertikalfördereinrichtungen 3, 4 mit einer Vielzahl von Transportebenen versehen sind ist, ist es nicht notwendig, dass diese bei einem Horizontalumlauf 65 reversierend betrieben werden, da eine leere Schiene 10 einer Lagerebene 5 stets zur Verfügung steht, sobald ein Lagergutträger aus dieser Ebene um eine Ebene oder ein ganzzahliges Vielfaches einer Ebene weitertransportiert wurde.

Der Horizontalumlauf 65 muss nicht durch zwei unmittelbar benachbarte Lagerebenen 5 gehen, sondern kann auch mehrere dazwischen liegende Lagerebenen überbrücken. Liegen allerdings die an einem Horizontalumlauf 65 beteiligten Ebenen weiter auseinander, so dauert der Horizontalumlauf 65 länger, da durch die Vertikalfördereinrichtungen 3, 4 eine größere Distanz in vertikaler Richtung zu überbrückten ist.

## Patentansprüche

1. Horizontal-Umlauflagersystem (1) zur Lagerung von mittels Lagergutträgem (6) aufgenommenem Lagergut, mit einem Lagerbereich (2), der wenigstens drei übereinanderliegende, sich horizontal erstreckende Lagerebenen (5) aufweist, in denen jeweils mehrere Lagergutträger (6) hintereinander angeordnet sind, mit zwei Vertikalfördereinrichtungen (3, 4), zwischen denen sich der Lagerbereich (2) befindet, und welche die Lagerebenen (5) in vertikaler Richtung verbinden, mit Horizontalfördereinrichtungen (8), die jeweils einer Lagerebene (5) zugeordnet sind und durch welche die Lagergutträger (6) in den Lagerebenen (5) in Richtung der Vertikalfördereinrichtungen (3, 4) bewegbar sind, wobei eine Steuereinheit (18) vorgesehen ist und wobei das Horizontal-Umlauflagersystem (1) von der Steuereinheit (18) in einen Zustand überführbar ausgestaltet ist, in dem jeweils zwei der wenigstens drei Lagerebenen (5a, 5b; 5c, 5d) und die beiden Vertikalfördereinrichtungen (3, 4) jeweils paarweise gegenläufig angetrieben sind und einen Horizontalumlauf (65) für die Lagergutträger (6) über die zwei Lagerebenen (5a, 5b; 5c, 5d) und die Vertikalfördereinrichtungen (3, 4) bilden.

2. Horizontal-Umlauflagersystem (1) nach Anspruch 1, **dadurch gekennzeichnet, dass** die Lagerebenen (5) unabhängig voneinander antreibbar ausgebildet sind.

3. Horizontal-Umlauflagersystem (1) nach Anspruch 2, **dadurch gekennzeichnet, dass** jeweils einem Paar von Lagerebenen (5) wenigstens ein eigener Horizontalantrieb (8c) zugeordnet ist.

4. Horizontal-Umlauflagersystem (1) nach einem der oben genannten Ansprüche, **dadurch gekennzeichnet, dass** die Horizontalfördereinrichtung (8) einen umlaufenden Zugmitteltrieb (8a) umfasst, von dem jeweils ein Trum einer Lagerebene (5) des Paares zugeordnet ist.

5. Horizontal-Umlauflagersystem (1) nach Anspruch 4, **dadurch gekennzeichnet, dass** der Zugmitteltrieb (8a) zwischen den Lagergutebenen (5) des wenigstens einen Paares angeordnet ist.

6. Horizontal-Umlauflagersystem (1) nach Anspruch 5, **dadurch gekennzeichnet, dass** die obere Lagergutebene des wenigstens einen Paares oberhalb der ihr zugeordneten Horizentalfördereinrichtung (8) und die untere Lagergutebenen (5) des wenigstens einen Paares unterhalb der ihr zugeordneten Horizontalfördereinrichtung (8) angeordnet ist.

7. Horizontal-Umlauflagersystem (1) nach einem der oben genannten Ansprüche, **dadurch gekennzeichnet, dass** die Antriebe (8c, 15, 60b) gemeinsam an einer Seitenfläche des Horizontal-Umlauflagersystems (1) angeordnet sind.

8. Horizontal-Umlauflagersystem (1) nach einem der oben genannten Ansprüche, **dadurch gekennzeichnet, dass** die Lagerebenen (5) durch ein Schienensystem (7) gebildet sind und sich die Lagergutträger (6) einer Lagerebene (5) auf dem Schienensystern (7) horizontal beweglich abstützen.

9. Horizontal-Umfauflagersystem (1) nach einem der oben genannten Ansprüche, **dadurch gekennzeichnet, dass** die Anzahl der Lagergutträger (6) im Horizontat-Umlauflagersystem (1) höchstens N + n beträgt, wobei N die Anzahl der Lagergutträger (6) bei voll bestücktem Lagerbereich (2) ist und n die Anzahl der Verdkalfördereinrichtungen (3, 4) ist.

10. Horizontal-Umlauflagersystem (1) nach einem der oben genannten Ansprüche, wobei die Vertikalfördereinrichtungen (3, 4) jeweils eine Mehrzahl von übereinander liegenden Transportebenen aufweisen.

11. Horizontal-Umlauflagersystem (1) nach Anspruch 10, **dadurch gekennzeichnet, dass** die Vertikalfördereinrichtungen (3, 4) ein Schienensystem (10) aufweisen, auf denen sich ein von der Vertikalfördereinrichtung (3, 4) geförderter Lagergutträger (6) abstützt.

12. Horizontal-Umlauflagersystem (1) nach Anspruch 11, **dadurch gekennzeichnet, dass** die Vertikalfördereinrichtungen (3,4) jeweils wenigstens ein Zugmittelgetriebe (14) umfassen, an dem die Schienen des Schienensystems (10) der Vertikatfördereinrichtung (3, 4) befestigt sind.

13. Horizontal-Umlauflagersystem (1) nach einem der Ansprüche 10 bis 12, **dadurch gekennzeichnet, dass** die Schienen des Schienensystems (7) der Vertikatfördereinrichtung (3, 4) jeweils durch wenigstens eine vertikal auf einer Stützfläche (17) laufende Rollen (16) wenigstens in dem mit dem Lagerbereich (2) überlappenden Bereich abgestützt sind.

14. Horizontal-Umlauflagersystem (1) nach Anspruch 10, **dadurch gekennzeichnet, dass** der Abstand (12) der Transportebenen dem Abstand der Lagerebenen (5) entspricht.

15. Horizontal-Umlauflagersystem (1) nach Anspruch 10 oder 14, **dadurch gekennzeichnet, dass** die Transportebenen einer Vertikalfördereinrichtung (3, 4) bewegungsstarr miteinander gekoppelt sind.

16. Horizontal-Umlauflagersystem (1) nach einem der oben genannten Ansprüche, **dadurch gekennzeichnet, dass** die Anzahl der Lagerebenen (5) kleiner ist als die Anzahl der in einer Lagerebene (5) höchstens aufnehmbaren Lagergutträger (6).

17. Horizontal-Umlauflagersystem (1) nach einem der oben genannten Ansprüche, **dadurch gekennzeichnet, dass** die Horizontalfördereinrichtungen (8) Mitnehmer (8d) aufweisen, die in lagergutträgerseitige Mitnehmerkupplungen (81) vertikal ein- und ausfahrbar ausgestaltet sind.

18. Horizontal-Umlauflagersystem (1) nach Anspruch 17, **dadurch gekennzeichnet, dass** ein Paar von Mitnehmern (8d) jeweils einem Lagergutträger (6) zugeordnet ist.

19. Horizontal-Umlauflagersystem (1) nach Anspruch 17 oder 18, **dadurch gekennzeichnet, dass** die Lagergutträger (6) an ihren den Vertikatfördereinrichtungen (3, 4) zugewandten Seiten mit jeweils mindestens einer Mitnehmerkupplung (81) versehen sind.

20. Horizontal-Umlauflagersystem (1) nach einem der Ansprüche 17 bis 19, **dadurch gekennzeichnet, dass** in den an die Vertikalfördereinrichtungen (3, 4) grenzenden Bereichen der Lagergutebenen (5) ein Mitnehmer (8d) in jeweils der von der angrenzenden Vertikalfördereinrichtung (4) abgewandten Mitnehmerkupplung (81) aufgenommen ist.

21. Horizontal-Umlauflagersystem (1) nach einem der oben genannten Ansprüche, **dadurch gekennzeichnet, dass** an wenigstens einer den Lagergutträger (6) in der Vertikalfördereintichtung (4) tragenden Auflagefläche (34) ein Rastmittel (34b) vorgesehen ist, welches wiederholt in Eingriff mit einem lagergutträgerseitigen Gegenrastmittel bringbar ausgestaltet ist.

22. Hotizontal-Umlauflagersystem (1) nach Anspruch 21, **dadurch gekennzeichnet, dass** das Rastmittel (34b) als ein Vorsprung und das Gegenrastmittel als eine Rolle (80) oder ein Gleitschuh ausgestaltet ist.

23. Verfahren zum Zugriff auf einen zur Bereitstellung bestimmten, Lagergut aufnehmenden Lagergutträger (6) eines Horizontal-Umlauflagersystems (1), wobei bei dem Verfahren die Lagergutträger (6) zum Ein- und/oder Auslagern hintereinander in wenigstens drei übereinanderliegende Lagerebenen (5) bewegt werden und mittels einer Vertikalfördereinrichtung der zur Bereitstellung bestimmte Lagergutträger (6b) mittels einer Verdkalfördereinrichtung (3) zu einer Bereitsteltungsstation (60) gefördert wird, wobei ein Horizontalumlauf von Lagergutträgern (6) durch zwei der wenigstens drei Lagerebenen (5a, 5b; 5c, 5d) des Lagerbereichs (2) gebildet wird, indem die Lagergutträger (6) durch die beiden Lagerebenen (5a, 5b; 5c, 5d) in jeweils gegenläufiger Richtung im Wesentlichen horizontal und an den beiden Enden der Lagerebenen in gegenläufiger Richtung im Wesentlichen senkrecht zirkulieren, bis die Vertikalfördereinrichtung auf den bestimmten Lagergutträger zugreifen kann.

24. Verfahren nach Anspruch 23, **dadurch gekennzeichnet dass** die Lagergutträger (6) in einem Horizontalumlauf (65) umlaufen, während an der Bereitstellungsstation (60) ein Lagergutträger (6a) bereitgestellt wird.

25. Verfahren nach Anspruch 23 oder 24, **dadurch gekennzeichnet, dass** nach dem Transport des zur Bereitstellung bestimmten Lagergutträgers (6b) zur Bereitstellungsstation (60) ein neuer Horizontalumlauf (65) gebildet wird, in den der vorher bereitgestellte Lagergutträger (6a) eingespeist wird.

26. Verfahren nach einem der Ansprüche 23 bis 25, **dadurch gekennzeichnet, dass** der Horizontalumlauf (65) durch zwei unmittelbar übereinanderliegende Lagerebenen (5a, 5b; 5c, 5d) gebildet wird.

27. Verfahren nach einem der Ansprüche 23 bis 26, **dadurch gekennzeichnet, dass** jede der Vertikalfördereinrichtungen während des Horizontalumlaufs (65) im Wesentlichen ohne Bewegungsumkehr betrieben wird.

28. Verfahren nach einem der Ansprüche 23 bis 27, **dadurch gekennzeichnet, dass** der Horizontalumlauf durch zwei benachbarte Lagerebenen (5) erfolgt.

## Claims

1. A horizontal circuit storage system (1) for storing storage goods carried by load-carriers (6), with a storage zone (2) with at least three stacked, horizontally extending storage planes (5), in which a plurality of load-carriers (6) are each arranged in a row, with two vertical conveyers (3, 4), between which the storage zone (2) is located and which interconnect the storage planes (5) in the vertical direction, with horizontal conveyers (8), which are associated each with a storage plane (5) and by which the load-carriers (6) are movable in the storage planes (5) in the direction of the vertical conveyers (3, 4), wherein a control unit (18) is provided and wherein the horizontal circuit storage system (1) is adapted to be brought by the control unit (18) into a condition in which two of the at least three storage planes (5a, 5b; 5c, 5d) and both of the vertical conveyers (3, 4) are each driven in pairs in opposite directions and form a horizontal circuit (65) for the load-carriers (6) across the two storage planes (5a, 5b; 5c, 5d) and the vertical conveyers (3, 4).

2. Horizontal circuit storage system (1) according to Claim 1, **characterised in that** the storage planes (5) are adapted to be driven independently of one another.

3. Horizontal circuit storage system (1) according to Claim 2, **characterised in that** at least one separate horizontal drive (8c) is associated with each pair of storage planes (5).

4. Horizontal circuit storage system (1) according to one of the above mentioned claims, **characterised in that** the horizontal conveyer (8) comprises a circulating traction drive (8a), each span of which is associated with a storage plane (5) of the pair.

5. Horizontal circuit storage system (1) according to Claim 4, **characterised in that** the traction drive (8a) is arranged between the storage planes (5) of the at least one pair.

6. Horizontal circuit storage system (1) according to Claim 5, **characterised in that** the upper storage plane of the at least one pair is arranged above the horizontal conveyer (8) associated with it and the lower storage plane (5) of the at least one pair is arranged below the horizontal conveyer (8) associated with it.

7. Horizontal circuit storage system (1) according to one of the above mentioned claims, **characterised in that** the drives (8c, 15, 60b) are arranged commonly on a side surface of the horizontal circuit storage system (1).

8. Horizontal circuit storage system (1) according to one of the above mentioned claims, **characterised in that** the storage planes (5) are formed by a rail system (7) and the load-carriers (6) of a storage plane (5) are supported on the rail system (7) in such a manner that they can be moved horizontally.

9. Horizontal circuit storage system (1) according to one of the above mentioned claims, **characterised in that** the number of load-carriers (6) in the horizontal circuit storage system (1) is maximum N + n, wherein N is the number of load-carriers (6) when the storage zone (2) is fully loaded and n is the number of vertical conveyers (3, 4).

10. Horizontal circuit storage system (1) according to one of the above mentioned claims, wherein each of the vertical conveyers (3, 4) has a plurality of stacked transport planes.

11. Horizontal circuit storage system (1) according to Claim 10, **characterised in that** the vertical conveyers (3, 4) have a rail system (10) on which a load-carrier (6) conveyed by the vertical conveyer (3, 4) is supported.

12. Horizontal circuit storage system (1) according to Claim 11, **characterised in that** each of the vertical conveyers (3, 4) comprises at least one traction drive (14) to which the rails of the rail system (10) of the vertical conveyer (3, 4) are attached.

13. Horizontal circuit storage system (1) according to one of the Claims 10 to 12, **characterised in that** each of the rails of the rail system (7) of the vertical conveyer (3, 4) is supported by at least one roller (16) running vertically on a support surface (17) in the area overlapping the storage zone (2).

14. Horizontal circuit storage system (1) according to Claim 10, **characterised in that** the distance (12) of the transport planes corresponds to the distance of the storage planes (5).

15. Horizontal circuit storage system (1) according to Claim 10 or 14, **characterised in that** the transport planes of a vertical conveyer (3, 4) are coupled to one another in a manner that is rigid with respect to movement.

16. Horizontal circuit storage system (1) according to one of the above mentioned claims, **characterised in that** the number of storage planes (5) is less than the maximum number of load-carriers (6) that can be held in a storage plane (5).

17. Horizontal circuit storage system (1) according to one of the above mentioned claims, **characterised in that** the horizontal conveyers (8) have drivers (8d) that are adapted to be vertically driven into and out of driver couplings (81) on the load-carrier side.

18. Horizontal circuit storage system (1) according to Claim 17, **characterised in that** a pair of drivers (8d) is associated with each load-carrier (6).

19. Horizontal circuit storage system (1) according to Claim 17 or 18, **characterised in that** each of the load-carriers (6) is provided, on its faces facing towards the vertical conveyers (3, 4), with at least one driver coupling (81).

20. Horizontal circuit storage system (1) according to Claims 17 to 19, **characterised in that** in the areas of the storage planes (5) adjacent to the vertical conveyers (3, 4), a driver (8d) is held in the driver couplings (81) facing away from the adjacent vertical conveyer (4).

21. Horizontal circuit storage system (1) according to one of the above mentioned claims, **characterised in that** a locking means (34b) is provided on at least one of the supporting surfaces (34) supporting the load-carriers (6) in the vertical conveyer (4), the locking means being adapted to engage repeatedly in a counter-locking means on the load-carrier side.

22. Horizontal circuit storage system (1) according to Claim 21, **characterised in that** the locking means (34b) is formed as a projection and the counter-locking means is formed as a roller (80) or a sliding block.

23. Method for accessing a load-carrier (6) of a horizontal circuit storage system (1), the load carrier being destined to be delivered and adapted to hold storage goods, wherein with the method, the load-carriers (6) are moved, for loading and/or unloading, one behind the other in at least three stacked storage planes (5), and that by means of a vertical conveyer, the load-carrier (6b) that is destined to be delivered is conveyed to a delivery station (60) by means of a vertical conveyer (3), wherein a horizontal circuit of load-carriers (6) is formed by two of the at least three storage planes (5a, 5b; 5c, 5d) of the storage zone (2), by circulating the load-carriers (6) essentially horizontally through the two storage planes (5a, 5b; 5c, 5d) in an opposite direction, respectively, and essentially vertically in opposite directions at the two ends of the storage planes, until the vertical conveyer can access the destined load-carrier.

24. Method according to Claim 23, **characterised in that** the load-carriers (6) circulate in a horizontal circuit (65) while a load-carrier (6a) is provided at the delivery station (60).

25. Method according to Claim 23 or 24, **characterised in that** after the transport to the delivery station (60) of the load-carrier (6b) that is destined to be delivered, a new horizontal circuit (65) is formed into which the previously supplied load-carrier (6a) is fed.

26. Method according to one of the Claims 23 to 25, **characterised in that** the horizontal circuit (65) is formed by two storage planes (5a, 5b; 5c, 5d) one lying directly above the other.

27. Method according to one of the Claims 23 to 26, **characterised in that** each of the vertical conveyers is operated essentially without a reverse in movement during the horizontal circuit (65).

28. Method according to one of the Claims 23 to 27, **characterised in that** the horizontal circuit is brought about through two adjacent storage planes (5).

## Revendications

1. Système de stockage à circulation horizontale (1) pour stocker des produits logés à l'aide de supports de produits stockés (6), pourvu d'une zone de stockage (2) comportant au moins trois niveaux de stockage (5) qui sont superposés, qui s'étendent à l'horizontale et dans chacun desquels plusieurs supports de produits stockés (6) sont disposés les uns derrière les autres, de deux convoyeurs verticaux (3, 4) entre lesquels se trouve la zone de stockage (2) et qui relient les niveaux de stockage (5) dans le sens vertical, et de convoyeurs horizontaux (8) qui sont associés chacun à un niveau de stockage (5) et grâce auxquels les supports de produits stockés (6) prévus dans les niveaux de stockage (5) sont aptes à être déplacés en direction des convoyeurs verticaux (3, 4), une unité de commande (18) étant prévue et le système de stockage à circulation horizontale (1) étant conçu pour pouvoir être amené par l'unité de commande (18) dans une position où deux des trois niveaux de stockage (5a, 5b ; 5c, 5d), ou plus, et les deux convoyeurs verticaux (3, 4) sont entraînés en sens inverse, par paires, et forment une circulation horizontale (65) pour les supports de produits stockés (6) par l'intermédiaire des deux niveaux de stockage ((5a, 5b ; 5c, 5d) et des convoyeurs verticaux (3, 4) .

2. Système de stockage à circulation horizontale (1) selon la revendication 1, **caractérisé en ce que** les niveaux de stockage (5) sont conçus pour pouvoir être entraînés indépendamment les uns des autres.

3. Système de stockage à circulation horizontale (1) selon la revendication 2, **caractérisé en ce qu'**au moins un entraînement horizontal individuel (8c) est associé à chaque paire de niveaux de stockage (5).

4. Système de stockage à circulation horizontale (1) selon l'une des revendications précédentes, **caractérisé en ce que** le convoyeur horizontal (8) comprend une transmission à traction sans fin (8a) dont un brin est associé à un niveau de stockage (5) de la paire.

5. Système de stockage à circulation horizontale (1) selon la revendication 4, **caractérisé en ce que** la transmission à traction (8a) est disposée entre les niveaux de produits stockés (5) de la paire ou des paires.

6. Système de stockage à circulation horizontale (1) selon la revendication 5, **caractérisé en ce que** le plan de produits stockés (5) supérieur de la paire ou des paires est disposé au-dessus du convoyeur horizontal (8) qui lui est associé, et le plan de produits stockés (5) inférieur de la paire ou des paires est disposé au-dessous du convoyeur horizontal (8) qui lui est associé.

7. Système de stockage à circulation horizontale (1) selon l'une des revendications précédentes, **caractérisé en ce que** les entraînements (8c, 15, 60b) sont disposés conjointement sur une surface latérale du système de stockage à circulation horizontale (1).

8. Système de stockage à circulation horizontale (1) selon l'une des revendications précédentes, **caractérisé en ce que** les niveaux de stockage (5) sont formés par un système à rails (7) et les supports de produits stockés (6) d'un niveau de stockage (5) s'appuient sur le système à rails (7) en étant mobiles horizontalement.

9. Système de stockage à circulation horizontale (1) selon l'une des revendications précédentes, **caractérisé en ce que** le nombre de supports de produits stockés (6) dans le système de stockage à circulation horizontale (1) est au maximum de N+n, N désignant le nombre de supports de produits stockés (6) pour une zone de stockage (2) entièrement garnie, et n le nombre de convoyeurs verticaux (3, 4) .

10. Système de stockage à circulation horizontale (1) selon l'une des revendications précédentes, dans lequel les convoyeurs verticaux (3, 4) comportent chacun plusieurs niveaux de transport superposés.

11. Système de stockage à circulation horizontale (1) selon la revendication 10, **caractérisé en ce que** les convoyeurs verticaux (3, 4) comportent un système à rails (10) sur lequel s'appuie un support de produits stockés (6) transporté par le convoyeur vertical (3, 4).

12. Système de stockage à circulation horizontale (1) selon la revendication 11, **caractérisé en ce que** les convoyeurs verticaux (3, 4) comprennent chacun au moins une transmission à traction (14) à laquelle sont fixés les rails du système à rails (10) du convoyeur vertical (3, 4).

13. Système de stockage à circulation horizontale (1) selon l'une des revendications 10 à 12, **caractérisé en ce que** chacun des rails du système à rails (7) du convoyeur vertical (3, 4) est en appui, au moins dans la zone qui couvre la zone de stockage (2), grâce à au moins un galet (16) qui roule à la verticale sur une surface d'appui (17).

14. Système de stockage à circulation horizontale (1) selon la revendication 10, **caractérisé en ce que** l'écartement (12) des niveaux de transport correspond à l'écartement des niveaux de stockage (5).

15. Système de stockage à circulation horizontale (1) selon la revendication 10 ou 14, **caractérisé en ce que** les niveaux de transport d'un convoyeur vertical (3, 4) sont accouplés entre eux en étant fixes.

16. Système de stockage à circulation horizontale (1) selon l'une des revendications précédentes, **caractérisé en ce que** le nombre de niveaux de stockage (5) est inférieur au nombre de supports de produits stockés (6) pouvant être reçus au maximum dans un niveau de stockage (5).

17. Système de stockage à circulation horizontale (1) selon l'une des revendications précédentes, **caractérisé en ce que** les convoyeurs horizontaux (8) comportent des organes d'entraînement (8d) qui sont conçus pour pouvoir être rétractés et déployés verticalement dans des accouplements d'organes d'entraînement (81) prévus côté supports de produits stockés.

18. Système de stockage à circulation horizontale (1) selon la revendication 17, **caractérisé en ce qu'**une paire d'organes d'entraînement (8d) est associée à chaque support de produits stockés (6).

19. Système de stockage à circulation horizontale (1) selon la revendication 17 ou 18, **caractérisé en ce que** les supports de produits stockés (6) sont pourvus, sur leurs côtés associés aux convoyeurs verticaux (3, 4), d'au moins un accouplement d'organes d'entraînement (81).

20. Système de stockage à circulation horizontale (1) selon l'une des revendications 17 à 19, **caractérisé en ce que** dans les zones des niveaux de produits stockés (5) qui sont voisines des convoyeurs verticaux (3, 4), un organe d'entraînement (8d) est logé dans chaque accouplement d'organe d'entraînement (81) opposé au convoyeur vertical (4) voisin.

21. Système de stockage à circulation horizontale (1) selon l'une des revendications précédentes, **caractérisé en ce qu'**il est prévu sur au moins une surface d'appui (34) qui porte le support de produits stockés (6) dans le convoyeur vertical (4) un moyen de verrouillage (34b) qui est conçu pour pouvoir être mis en contact à plusieurs reprises avec un moyen de verrouillage opposé situé côté support de produits stockés.

22. Système de stockage à circulation horizontale (1) selon la revendication 21, **caractérisé en ce que** le moyen de verrouillage (34b) est conçu comme une saillie, et le moyen de verrouillage opposé comme un galet (80) ou comme un patin de guidage.

23. Procédé pour accéder à un support de produits stockés (6), recevant des produits stockés et destinés à une mise à disposition, d'un système de stockage à circulation horizontale (1), étant précisé que selon ce procédé les supports de produits stockés (6), pour le stockage et/le déstockage, sont déplacés les uns derrière les autres dans au moins trois niveaux de stockage (5) superposés et que le support (6b) destiné à la mise à disposition des produits stockés est amené à l'aide d'un convoyeur vertical (3) jusqu'à une station de mise à disposition (60), et étant précisé qu'une circulation horizontale de supports de produits stockés (6) est formée par deux des trois niveaux de stockage (5a, 5b ; 5c, 5d), ou plus, de la zone de stockage (2), grâce au fait que les supports (6) circulent sur les deux niveaux de stockage (5a, 5b ; 5c, 5d) globalement à l'horizontale, en sens inverse, et aux deux extrémités des niveaux de stockage globalement à la verticale, en sens inverse, jusqu'à ce que le convoyeur vertical puisse accéder au support de produits stockés défini.

24. Procédé selon la revendication 23, **caractérisé en ce que** les supports de produits stockés (6) suivent une circulation horizontale (65) pendant qu'un support de produits stockés (6a) est mis à disposition au niveau de la station de mise à disposition (60).

25. Procédé selon la revendication 23 ou 24, **caractérisé en ce qu'**après le transport du support de produits stockés (6b) destiné à la mise à disposition jusqu'à la station de mise à disposition (60), une nouvelle circulation horizontale (65) est formée, dans laquelle est amené le support de produits stockés (6a) mis à disposition précédemment .

26. Procédé selon l'une des revendications 23 à 25, **caractérisé en ce que** la circulation horizontale (65) est formée par deux niveaux de stockage (5a, 5b ; 5c, 5d) disposés directement l'un au-dessus de l'autre.

27. Procédé selon l'une des revendications 23 à 26, **caractérisé en ce que** chacun des convoyeurs verticaux fonctionne globalement sans inversion de mouvement pendant la circulation horizontale (65).

28. Procédé selon l'une des revendications 23 à 27, **caractérisé en ce que** la circulation horizontale se fait par deux niveaux de stockage (5) voisins.
